(19) Europäisches Patentamt
European Patent Office
Office européen des brevets

(11) **EP 4 779 521 A1**

(12) **EUROPEAN PATENT APPLICATION**
published in accordance with Art. 153(4) EPC

(43) Date of publication:
**22.07.2026 Bulletin 2026/30**

(51) International Patent Classification (IPC):
*G06N 3/0455* (2023.01)

(21) Application number: **24870755.6**

(86) International application number:
**PCT/CN2024/121011**

(22) Date of filing: **25.09.2024**

(87) International publication number:
**WO 2025/067211 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311284077**

(71) Applicant: **HUAWEI TECHNOLOGIES CO., LTD.
Shenzhen 518129 (CN)**

(72) Inventors:
• **CHEN, Xianing**
  **Shenzhen, Guangdong 518129 (CN)**
• **HU, Hailin**
  **Shenzhen, Guangdong 518129 (CN)**
• **WANG, Yunhe**
  **Shenzhen, Guangdong 518129 (CN)**

(74) Representative: **Grünecker Patent- und Rechtsanwälte
PartG mbB
Leopoldstraße 4
80802 München (DE)**

(54) **DATA PROCESSING METHOD AND APPARATUS**

(57)    A data processing method includes: obtaining time series information; processing the time series information via an encoder to obtain an encoding result, where the encoder includes a target network layer, the target network layer is configured to transform a feature of the time series information into a frequency domain to obtain spectrum information, the spectrum information includes a plurality of frequency bands and a frequency domain feature corresponding to the frequency bands, a part of the plurality of frequency bands is selected based on the frequency domain feature, feature extraction is performed on a frequency domain feature of the part of frequency bands to obtain a processing result, and the processing result is transformed into a time domain; and obtaining a task processing result over a task network based on the encoding result. **In** this application, the frequency domain feature is modeled to improve processing performance of the encoder for the series information.

FIG. 6A

## Description

This application claims priority to Chinese Patent Application No. 202311284077.1, filed with the China National Intellectual Property Administration on September 28, 2023 and entitled "DATA PROCESSING METHOD AND APPARATUS", which is incorporated herein by reference in its entirety.

## TECHNICAL FIELD

This application relates to the artificial intelligence field, and in particular, to a data processing method and apparatus.

## BACKGROUND

Artificial intelligence (Artificial Intelligence, AI) is a theory, a method, a technology, and an application system in which human intelligence is simulated, extended, and expanded via a digital computer or a machine controlled by a digital computer, to perceive an environment, obtain knowledge, and achieve an optimal result based on the knowledge. In other words, the artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions.

Series information may be referred to as a time series, a dynamic series, or the like, and is a numerical series formed by arranging indicator values of a phenomenon in a time sequence, and may reflect a development and change status of the phenomenon. A trend and regularity of development and changes of the phenomenon can be reflected by analyzing the time series. Internal causes of the changes of the phenomenon can be further explained by measuring factors that affect the time series, to provide reliable data support for forecasting and decision-making.

In the conventional technology, series information is processed by using a temporal convolutional network (temporal convolutional network, TCN) method. Specifically, time series features may be captured by using convolution kernels that slide along a time dimension. However, a small effective receptive field limits performance of temporal convolutional networks. Recently, TimesNet proposes to transform one-dimensional time series into a two-dimensional tensor based on multi-period components and model the two-dimensional tensor based on a 2D kernel, thereby modeling periodicity and a long-range dependency of a time series. However, multi-period transformation is a parameter redundancy operation. This increases a parameter quantity and a computation amount of a network, and ignores valuable information in domains other than in time domain. As a result, a processing capability of the network is poor.

## SUMMARY

According to a first aspect, this application provides a data processing method. The method includes: obtaining time series information; processing the time series information via an encoder to obtain an encoding result, where the encoder includes a target network layer, the target network layer is configured to transform a feature of the time series information into a frequency domain to obtain spectrum information, the spectrum information includes a plurality of frequency bands and a frequency domain feature corresponding to the frequency bands, a part of the plurality of frequency bands is selected based on the frequency domain feature, feature extraction is performed on a frequency domain feature of the part of frequency bands to obtain a processing result, the processing result is transformed into a time domain to obtain a time domain representation, and the time domain representation is used as the encoding result or used to obtain the encoding result through feature extraction; and obtaining a task processing result over a task network based on the encoding result.

In this application, the frequency domain feature is modeled to improve processing performance of the encoder for the series information.

In a possible implementation, the spectrum information includes the plurality of frequency bands and the frequency domain feature corresponding to the frequency bands. The target network layer may select the part of the plurality of frequency bands based on the frequency domain feature, and perform feature extraction on the frequency domain feature of the part of frequency bands to obtain the processing result (because feature extraction is performed on the feature of the part of frequency bands, a kernel may be referred to as a sparse kernel).

The time domain representation may be input to a next adjacent network layer to continue feature extraction, or may be connected to an output layer to obtain the encoding result, or may be directly output as the encoding result.

Feature extraction is performed on only the frequency domain feature of the part of frequency bands, that is, sparse modeling is performed, which improves network performance while reducing a computation amount. Specifically, because a large sparse kernel can cover all important frequencies, long-term and short-term dependencies and different period information of a feature can be captured, and computational complexity is low. In this process, even if a sparse operation is performed on only a significant frequency part, a model can achieve similar or even higher performance based on fewer parameters.

In a possible implementation, the feature extraction is an element-wise multiplication operation performed on the frequency domain feature of the part of frequency bands based on a kernel kernel. Differences between the element-wise multiplication operation and convolution are as follows: (1) A result obtained by performing the element-wise multiplication on the kernel and the feature is not averaged, and an original scale is retained. (2) There is no sliding window operation herein. Therefore, feature extraction is performed by performing the element-wise multiplication on the sparse kernel and the feature.

In a possible implementation, the frequency domain feature includes a feature of a plurality of dimensions, and that feature extraction is performed on the frequency domain feature of the part of frequency bands includes: performing feature extraction on a feature, in the frequency domain feature of the part of frequency bands, of a part of the plurality of dimensions.

In other words, a feature extraction manner of a frequency domain feature extraction part further includes dimension sparsification. For example, after a frequency domain feature $X_F \in \left[\frac{L}{2} + 1\right] \times C$ is obtained, $L$ is a time domain length, $\left[\frac{L}{2} + 1\right]$ is a frequency domain length, and C is a dimension quantity, a kernel kernel scale may be set to Kernel $\in \left[\frac{L}{2} + 1\right] \times K$, where K < C. In this case, the kernel performs sparsification on a feature extraction operation of performing the element-wise multiplication on $X_F$, direction to perform the element-wise multiplication on $X_F$. K dimensions are selected in a fixed selection manner or a random selection manner, or may be adaptively selected by a network through learning.

In a possible implementation, transforming the feature of the time series information into the frequency domain includes: transforming the feature of the time series information in a time domain direction and/or a data dimension direction into the frequency domain.

For example, the foregoing operation of transforming the time domain feature into the frequency domain may be performed in the time direction through Fourier transform. In addition, Fourier transform in the dimension direction may be further introduced to obtain the frequency domain feature in the dimension direction, or a frequency domain feature in both the time direction and the dimension direction is modeled through two-dimensional Fourier transform. In the foregoing manner, a plurality of types of frequency domain features may be learned.

In a possible implementation, transforming the feature of the time series information into the frequency domain includes: transforming, through the Fourier transform or wavelet transform, the feature of the time series information into the frequency domain.

In a possible implementation, that the part of the plurality of frequency bands is selected based on the frequency domain feature includes: determining, based on the frequency domain feature, an amplitude corresponding to each frequency band, and selecting N frequency bands with a maximum amplitude or N frequency bands with a minimum amplitude from the plurality of frequency bands.

In a possible implementation, that the processing result is transformed into the time domain includes: transforming, into the time domain, the processing result and a frequency domain feature corresponding to a frequency band in the plurality of frequency bands other than the part of frequency bands.

In a possible implementation, the encoder further includes an embedding layer. The embedding layer includes a plurality of convolution kernels and an SE attention layer.

More convolutional layers and the SE attention layer are used to aggregate local information and increase a feature signal-to-noise ratio. This module can effectively improve performance of the model in various tasks.

In a possible implementation, the task processing result is a long-term or short-term forecasting result of the time series information, an editing result of the time series information, an anomaly detection result of the time series information, or a classification result of the time series information.

According to a second aspect, this application provides a data processing method. The method includes:

obtaining time series information;
processing the time series information via an encoder to obtain an encoding result, where
the encoder includes a target network layer, the target network layer is configured to transform a feature of the time series information into a frequency domain to obtain spectrum information, the spectrum information includes a plurality of frequency bands and a frequency domain feature corresponding to the frequency bands, the frequency domain feature is processed via a multilayer perceptron MLP to obtain a processing result, the processing result is transformed into a time domain to obtain a time domain representation, and the time domain representation is used as the encoding result or used to obtain the encoding result through feature extraction; and
obtaining a task processing result over a task network based on the encoding result.

In a possible implementation, that the frequency domain feature is processed via the multilayer perceptron MLP includes: processing the frequency domain feature in a frequency band direction and/or a data dimension direction via the multilayer perceptron MLP.

In a possible implementation, the frequency domain feature includes a feature of a plurality of dimensions, and that the frequency domain feature is processed via the multilayer perceptron MLP includes:
processing, a feature, in the frequency domain feature of the part of frequency bands, of a part of the plurality of dimensions via the multilayer perceptron MLP.

In a possible implementation, the task processing result is a long-term or short-term forecasting result of the time series information, an editing result of the time series information, an anomaly detection result of the time series information, or a classification result of the time series information.

According to a third aspect, this application provides a data processing apparatus. The apparatus includes:

an obtaining module, configured to obtain time series information; and
a processing module, configured to: process the time series information via an encoder to obtain an encoding result, where
the encoder includes a target network layer, the target network layer is configured to transform a feature of the time series information into a frequency domain to obtain spectrum information, the spectrum information includes a plurality of frequency bands and a frequency domain feature corresponding to the frequency bands, a part of the plurality of frequency bands is selected based on the frequency domain feature, feature extraction is performed on a frequency domain feature of the part of frequency bands to obtain a processing result, the processing result is transformed into a time domain to obtain a time domain representation, and the time domain representation is used as the encoding result or used to obtain the encoding result through feature extraction; and
obtain a task processing result over a task network based on the encoding result.

In a possible implementation, the feature extraction is an element-wise multiplication operation performed on the frequency domain feature of the part of frequency bands based on a kernel kernel.

In a possible implementation, the frequency domain feature includes a feature of a plurality of dimensions, and the processing module is specifically configured to perform feature extraction on a feature, in the frequency domain feature of the part of frequency bands, of a part of the plurality of dimensions.

In a possible implementation, transforming the feature of the time series information into the frequency domain includes: transforming the feature of the time series information in a time domain direction and/or a data dimension direction into the frequency domain.

In a possible implementation, the processing module is specifically configured to:
transform, through Fourier transform or wavelet transform, the feature of the time series information into the frequency domain.

In a possible implementation, the processing module is specifically configured to:
determine, based on the frequency domain feature, an amplitude corresponding to each frequency band, and select N frequency bands with a maximum amplitude or N frequency bands with a minimum amplitude from the plurality of frequency bands.

In a possible implementation, the processing module is specifically configured to:
transform, into the time domain, the processing result and a frequency domain feature corresponding to a frequency band in the plurality of frequency bands other than the part of frequency bands.

In a possible implementation, the encoder further includes an embedding layer.

The embedding layer includes a plurality of convolution kernels and an SE attention layer.

In a possible implementation, the task processing result is a long-term or short-term forecasting result of the time series information, an editing result of the time series information, an anomaly detection result of the time series information, or a classification result of the time series information.

According to a fourth aspect, this application provides a data processing apparatus. The apparatus includes:

an obtaining module, configured to obtain time series information; and
a processing module, configured to: process the time series information via an encoder to obtain an encoding result, where
the encoder includes a target network layer, the target network layer is configured to transform a feature of the time series information into a frequency domain to obtain spectrum information, the spectrum information includes a plurality of frequency bands and a frequency domain feature corresponding to the frequency bands, the frequency domain feature is processed via a multilayer perceptron MLP to obtain a processing result, the processing result is transformed into a time domain to obtain a time domain representation, and the time domain representation is used as the encoding result or used to obtain the encoding result through feature extraction; and

obtain a task processing result over a task network based on the encoding result.

In a possible implementation, that the frequency domain feature is processed via the multilayer perceptron MLP includes: processing the frequency domain feature in a frequency band direction and/or a data dimension direction via the multilayer perceptron MLP.

In a possible implementation, the frequency domain feature includes a feature of a plurality of dimensions, and the processing module is specifically configured to perform feature extraction on a feature, in the frequency domain feature of the part of frequency bands, of a part of the plurality of dimensions.

In a possible implementation, the task processing result is a long-term or short-term forecasting result of the time series information, an editing result of the time series information, an anomaly detection result of the time series information, or a classification result of the time series information.

According to a fifth aspect, an embodiment of this application provides a data processing apparatus. The apparatus may include a memory, a processor, and a bus system. The memory is configured to store a program. The processor is configured to execute the program in the memory, to perform the method according to any one of the first aspect or the optional implementations of the first aspect, and the method according to any one of the second aspect or the optional implementations of the second aspect.

According to a sixth aspect, an embodiment of this application provides a computer-readable storage medium. The computer-readable storage medium stores a computer program. When the computer program is run on a computer, the computer is enabled to perform the method according to any one of the first aspect or the optional implementations of the first aspect, and the method according to any one of the second aspect or the optional implementations of the second aspect.

According to a seventh aspect, an embodiment of this application provides a computer program. When the computer program is run on a computer, the computer is enabled to perform the method according to any one of the first aspect or the optional implementations of the first aspect, and the method according to any one of the second aspect or the optional implementations of the second aspect.

According to an eighth aspect, this application provides a chip system. The chip system includes a processor, configured to support a data processing apparatus in implementing the functions in the foregoing aspects, for example, sending or processing data or information in the foregoing methods. In a possible design, the chip system further includes a memory, and the memory is configured to store program instructions and data that are necessary for an execution device or a training device. The chip system may include a chip, or may include a chip and another discrete component.

## BRIEF DESCRIPTION OF DRAWINGS

FIG. 1A is a diagram of a structure of a main framework of artificial intelligence;
FIG. 1B and FIG. 1C are diagrams of a framework of an application system according to this application;
FIG. 1D is a diagram of an optional hardware structure of a terminal;
FIG. 2 is a diagram of a structure of a server;
FIG. 3 is a diagram of a system architecture according to this application;
FIG. 4 shows a cloud service procedure;
FIG. 5A and FIG. 5B are diagrams of structures of a network;
FIG. 6A is a schematic flowchart of a data processing method according to an embodiment of this application;
FIG. 6B is a diagram of a network structure according to this application;
FIG. 7 is a schematic flowchart of a data processing method according to an embodiment of this application;
FIG. 8 is a diagram of a structure of a data processing apparatus according to an embodiment of this application;
FIG. 9 is a diagram of a structure of an execution device according to an embodiment of this application;
FIG. 10 is a diagram of a structure of a training device according to an embodiment of this application; and
FIG. 11 is a diagram of a structure of a chip according to an embodiment of this application.

## DESCRIPTION OF EMBODIMENTS

The following describes embodiments of this application with reference to the accompanying drawings in embodiments of this application. Terms used in embodiments of this application are only used to explain specific embodiments of this application, but are not intended to limit this application.

The following describes embodiments of this application with reference to the accompanying drawings. A person of ordinary skill in the art may learn that, with development of technologies and emergence of a new scenario, the technical solutions according to embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects that have a same attribute are described in embodiments of this application. In addition, terms "include", "have", and any other variations thereof are intended to cover non-exclusive inclusion, so that a process, method, system, product, or device that includes a series of units is not limited to those units, but may include other units not expressly listed or inherent to such a process, method, product, or device.

The terms "substantially (substantially)", "about (about)", and the like used in this specification are approximation terms rather than degree terms, and are intended to take into account inherent deviations of measured values or calculated values that are known to a person of ordinary skill in the art. In addition, when embodiments of this application are described, "may (may)" is used to mean "one or more possible embodiments". The terms "use (use)", "using (using)", and "used (used)" used in this specification may be considered to be synonymous with the terms "utilize (utilize)", "utilizing (utilizing)", and "utilized (utilized)" respectively. In addition, the term "example (exemplary)" is intended to indicate an example or an illustration.

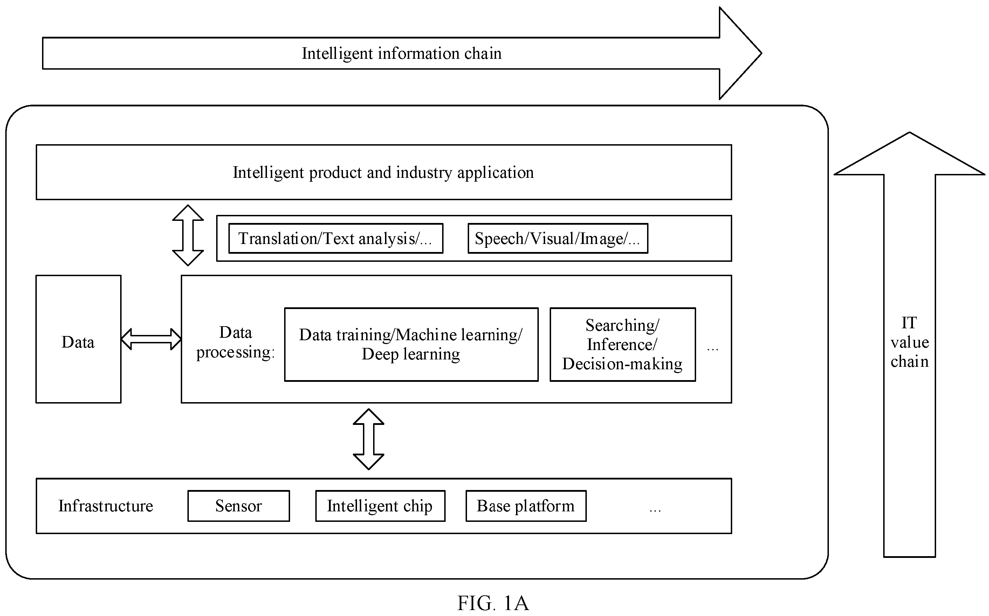

First, an overall operation process of an artificial intelligence system is described. FIG. 1A is a diagram of a structure of a main framework of artificial intelligence. The following describes the main framework of artificial intelligence from two dimensions: "intelligent information chain" (a horizontal axis) and "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computational capability support for the artificial intelligence system, implements communication with the external world, and implements support by using a base platform. External communication is performed via a sensor. A computational capability is provided by an intelligent chip (a hardware acceleration chip, for example, a CPU, an NPU, a GPU, an ASIC, or an FPGA). The base platform includes related platform assurance and support like a distributed computing framework and a network, and may include cloud storage and computing, an interconnection and interworking network, and the like. For example, the sensor communicates with the outside to obtain data, and the data is provided for an intelligent chip in a distributed computing system provided by the base platform for computing.

(2) Data

Data at an upper layer of the infrastructure indicates a data source in the artificial intelligence field. The data relates to a graph, an image, a speech, and text, further relates to internet of things data of a conventional device, and includes service data of an existing system and perception data like force, displacement, a liquid level, temperature, and humidity.

(3) Data processing

Data processing usually includes manners such as data training, machine learning, deep learning, searching, inference, and decision-making.

Machine learning and deep learning may mean performing symbolized and formalized intelligent information modeling, extraction, preprocessing, training, and the like on data.

Inference is a process in which human intelligent inference is simulated in a computer or an intelligent system, and machine thinking and problem resolving are performed based on formal information and an inference control policy. A typical function is searching and matching.

Decision-making is a process in which a decision is made after intelligent information is inferred, and usually provides functions such as classification, ranking, and forecasting.

(4) General capabilities

After data processing mentioned above is performed on the data, some general capabilities may further be formed based on a data processing result. For example, the general capabilities may be an algorithm or a general system, for example, translation, text analysis, computer vision processing, speech recognition, and image recognition.

(5) Intelligent product and industry application

The intelligent product and industry application are products and applications of the artificial intelligence system in various fields, are obtained by packaging an overall artificial intelligence solution, and implement productization and practical application of intelligent information decision-making. Application fields of the artificial intelligence system include intelligent terminals, intelligent transportation, intelligent healthcare, autonomous driving, a smart city, and the like.

This application may be applied to the image processing field in the artificial intelligence field. Image processing is used below as an example to describe a plurality of application scenarios implemented in products.

The following first describes an application scenario of this application.

This application may be applied to, but not limited to, an application with a series information processing function (which may be referred to as a series information processing application below), a cloud service provided by a cloud-side server, or the like. Descriptions are separately provided below.

1. Series information processing application

A product form in this embodiment of this application may be a series information processing application, and in particular, may be an application having a series information processing type. The series information processing application may be run on a terminal device or a cloud-side server.

Series information may be referred to as a time series, a dynamic series, or the like, and is a numerical series formed by arranging indicator values of a phenomenon in a time sequence, and may reflect a development and change status of the phenomenon. A trend and regularity of development and changes of the phenomenon can be reflected by analyzing the time series. Internal causes of the changes of the phenomenon can be further explained by measuring factors that affect the time series, to provide reliable data support for forecasting and decision-making. Specifically, the time series analysis includes a series of time series tasks such as long-term or short-term time series forecasting, imputation, anomaly detection, and classification, and is widely used during actual application, for example, power load forecasting, intelligent system monitoring, traffic flow forecasting, and energy consumption forecasting.

In a possible implementation, the series information processing application may perform series information processing based on input series information, to obtain a processing result.

In a possible implementation, a user may start a series information processing application installed on a terminal device, and input an image. The series information processing application may process the series information according to a method provided in embodiments of this application, and present a processing result to the user (a presentation manner may be but is not limited to displaying the processing result, saving the processing result, uploading the processing result to a cloud side, or the like).

In a possible implementation, a user may start a series information processing application installed on a terminal device, and input series information. The series information processing application may send the series information to a cloud-side server. The cloud-side server processes the series information according to a method provided in embodiments of this application, and sends a processing result back to the terminal device. The terminal device may present the processing result to the user (a presentation manner may be but is not limited to displaying the processing result, saving the processing result, uploading the processing result to a cloud side, or the like).

The following describes the series information processing application in embodiments of this application separately from a perspective of a functional architecture and a perspective of a product architecture for implementing a function.

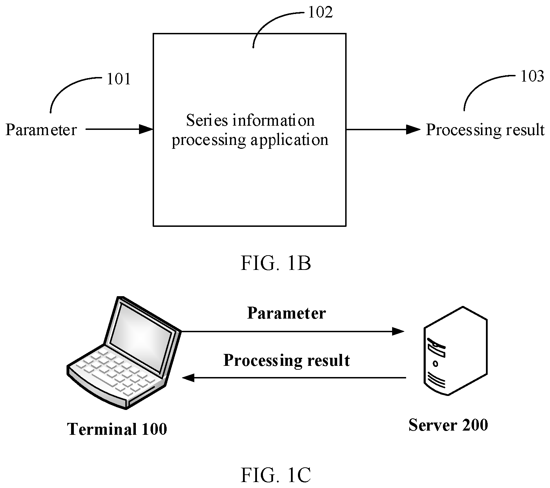

FIG. 1B is a diagram of a functional architecture of a series information processing application according to an embodiment of this application.

In a possible implementation, as shown in FIG. 1B, the series information processing application 102 may receive an input parameter 101 (for example, including series information), and generate a processing result 103. The series information processing application 102 may be executed (for example) in at least one computer system, and includes computer code. When the computer code is executed by one or more computers, the computer is enabled to perform a method provided in embodiments of this application.

FIG. 1C is a diagram of an entity architecture for running a series information processing application according to an embodiment of this application.

FIG. 1C is a diagram of an architecture of a system. The system may include a terminal 100 and a server 200. The server 200 may include one or more servers (in FIG. 1C, an example in which the server 200 includes one server is used for description), and the server 200 may provide, for one or more terminals, a method provided in embodiments of this application.

A series information processing application may be installed on the terminal 100. The application and a web page may provide an interface. The terminal 100 may receive a related parameter input by a user on a series information processing interface, and send the parameter to the server 200. The server 200 may obtain a processing result based on the received parameter, and return the processing result to the terminal 100.

It should be understood that, in some optional implementations, the terminal 100 may alternatively autonomously complete an action of obtaining a processing result based on a received parameter, without cooperation of the server. This is not limited in embodiments of this application.

The following describes a product form of the terminal 100 in FIG. 1C.

In embodiments of this application, the terminal 100 may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

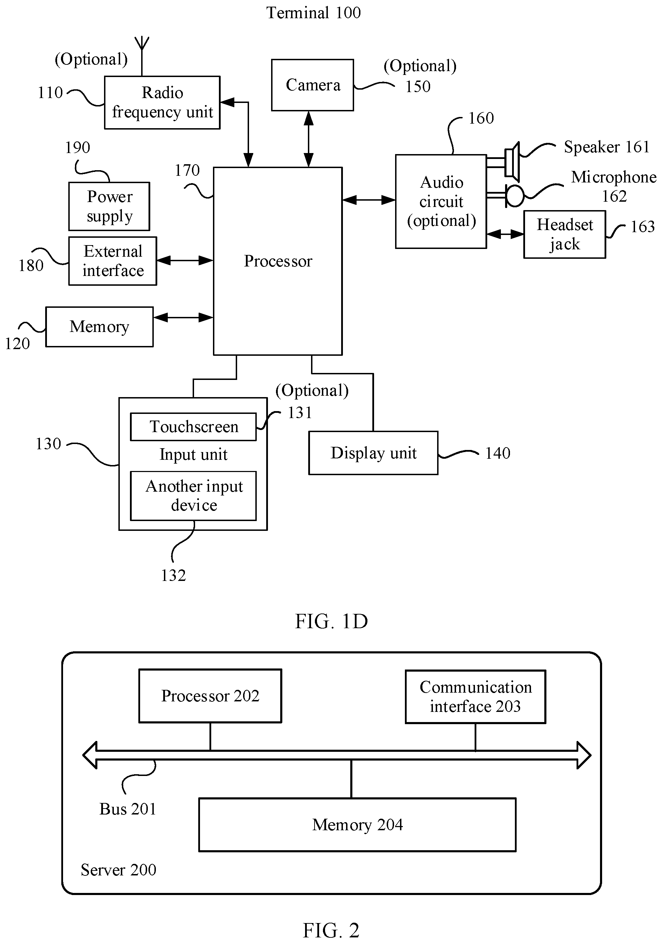

FIG. 1D is a diagram of an optional hardware structure of the terminal 100.

As shown in FIG. 1D, the terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art can understand that FIG. 1D is merely an example of the terminal or a multi-functional device but constitutes no limitation on the terminal or the multi-functional device. The terminal or the multi-functional device may include more or fewer components than those shown in the figure, or some components may be combined, or there may be different components.

The input unit 130 may be configured to receive input digital or character information, and generate a key signal input related to a user setting and function control of the portable multi-functional apparatus. Specifically, the input unit 130 may include a touchscreen 131 (optional) and/or another input device 132. The touchscreen 131 may collect a touch operation performed by a user on or near the touchscreen 131 (for example, an operation performed by the user on or near the touchscreen via any proper object such as a finger, a joint, or a stylus), and drive a corresponding connection apparatus based on a preset program. The touchscreen may monitor a touch action performed by the user on the touchscreen, convert the touch action into a touch signal, and send the touch signal to the processor 170, and can receive a command sent by the processor 170 and execute the command. The touch signal includes at least touch point coordinate information. The touchscreen 131 may provide an input interface and an output interface between the terminal 100 and the user. In addition, the touchscreen may be implemented in a plurality of types such as a resistive type, a capacitive type, an infrared ray type, and a surface acoustic wave type. In addition to the touchscreen 131, the input unit 130 may include the another input device. Specifically, the another input device 132 may include but is not limited to one or more of a physical keyboard, a functional button (for example, a volume control button or an on/off button), a trackball, a mouse, and a joystick.

The input device 132 may receive input series information or the like.

The display unit 140 may be configured to display information input by the user, information provided for the user, various menus of the terminal 100, an interaction interface, file display, and/or playing of any multimedia file. In embodiments of this application, the display unit 140 may be configured to display an interface, a processing result, and the like of a series information processing application.

The memory 120 may be configured to store instructions and data. The memory 120 may mainly include an instruction storage area and a data storage area. The data storage area may store various types of data such as a multimedia file and text. The instruction storage area may store software units such as an operating system, an application, and instructions for at least one function, or subsets and extended sets thereof. The memory 120 may further include a non-volatile random access memory, and provide the following for the processor 170: managing hardware, software, and data resources on a compute processing device, and supporting control on software and an application. The memory 120 is further configured to: store a multimedia file, and run a program and store an application.

The processor 170 is a control center of the terminal 100, connects various parts of the entire terminal 100 through various interfaces and lines, and performs various functions of the terminal 100 and processes data by running or executing the instructions stored in the memory 120 and invoking the data stored in the memory 120, to implement overall control on the terminal device. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It can be understood that the modem processor may not be integrated into the processor 170. In some embodiments, the processor and the memory may be implemented on a single chip. In other embodiments, the processor and the memory may be implemented on separate chips. The processor 170 may be further configured to:

generate a corresponding operation control signal, send the operation control signal to a corresponding component in the compute processing device, and read and process data in software, especially read and process the data and the program in the memory 120, so that function modules in the compute processing device perform corresponding functions, to control a corresponding component to perform an action based on an instruction requirement.

The memory 120 may be configured to store software code related to a data processing method. The processor 170 may perform steps of a data processing method of a chip, or may schedule another unit (for example, the input unit 130 and the display unit 140) to implement a corresponding function.

The radio frequency unit 110 (optional) may be configured to send and receive signals in an information sending/receiving process or a call process, for example, receive downlink information from a base station and send the downlink information to the processor 170 for processing, or send uplink-related data to a base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. Any communication standard or protocol may be used for the wireless communication, including but not limited to a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

In embodiments of this application, the radio frequency unit 110 may send series information to the server 200, and receive a processing result sent by the server 200.

It should be understood that the radio frequency unit 110 is optional, and may be replaced with another communication interface, for example, may be a network interface.

The terminal 100 further includes the power supply 190 (for example, a battery) for supplying power to various components. Preferably, the power supply may be logically connected to the processor 170 via a power management system, to implement functions such as charging and discharging management and power consumption management via the power management system.

The terminal 100 further includes the external interface 180. The external interface may be a standard micro USB interface or a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. A part or all of methods described below may be applied to the terminal 100 shown in FIG. 1D.

The following describes a product form of the server 200 in FIG. 1C.

FIG. 2 is a diagram of a structure of the server 200. As shown in FIG. 2, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 2 for representation, but this does not mean that there is only one bus or only one type of bus.

The processor 202 may be any one or more of the following processors: a central processing unit (central processing unit, CPU), a graphics processing unit (graphics processing unit, GPU), a microprocessor (microprocessor, MP), a digital signal processor (digital signal processor, DSP), or the like.

The memory 204 may include a volatile memory (volatile memory), for example, a random access memory (random access memory, RAM). The memory 204 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 204 may be configured to store software code related to a data processing method. The processor 202 may perform steps of a data processing method of a chip, or may schedule another unit to implement a corresponding function.

It should be understood that the terminal 100 and the server 200 may be central or distributed devices. A processor (for example, the processor 170 and the processor 202) in the terminal 100 and the server 200 may be a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the processor may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

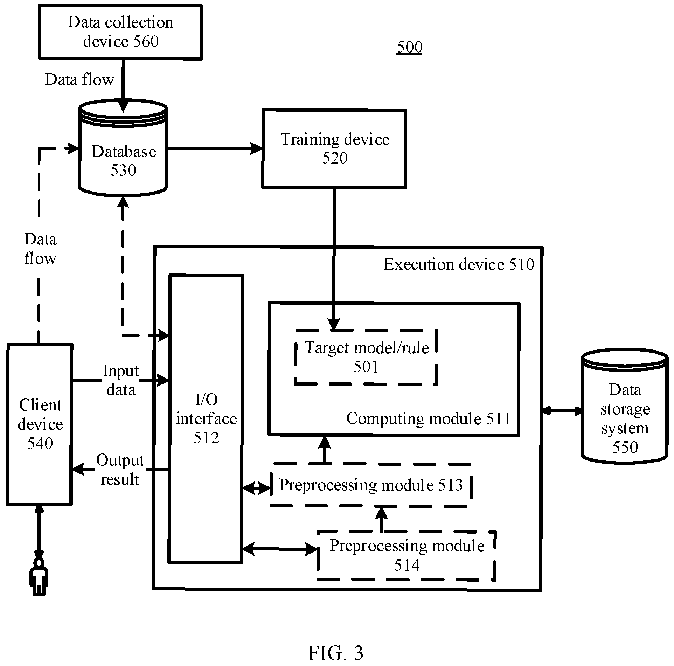

It should be understood that steps related to a model inference process in embodiments of this application relate to an AI-related operation. When the AI operation is performed, an instruction execution architecture of the terminal device and the server is not limited to the foregoing architecture in which the processor and the memory are combined. The system architecture provided in embodiments of this application is described in detail below with reference to FIG. 3.

FIG. 3 is a diagram of the system architecture according to an embodiment of this application. As shown in FIG. 3, the system architecture 500 includes an execution device 510, a training device 520, a database 530, a client device 540, a data storage system 550, and a data collection system 560.

The execution device 510 includes a computing module 511, an I/O interface 512, a preprocessing module 513, and a preprocessing module 514. The computing module 511 may include a target model/rule 501, and the preprocessing module 513 and the preprocessing module 514 are optional.

The execution device 510 may be the foregoing terminal device or server that runs the series information processing application.

The data collection device 560 is configured to collect a training sample. The training sample may be series information, included text, a location of the text, and the like. After collecting the training sample, the data collection device 560 stores the training sample in the database 530.

The training device 520 may obtain the target model/rule 501 by performing a pre-training process on a to-be-trained neural network (for example, a series information identification network and a series information monitoring network in embodiments of this application) based on the training sample maintained in the database 530.

It should be understood that the training device 520 may perform the pre-training process on the to-be-trained neural network based on the training sample maintained in the database 530, or perform fine-tuning on a model based on pre-training.

It should be noted that during actual application, the training sample maintained in the database 530 is not necessarily collected by the data collection device 560, and may be received from another device. In addition, it should be noted that the training device 520 does not necessarily completely train the target model/rule 501 based on the training sample maintained in the database 530, and may perform model training by obtaining a training sample from a cloud or another location. The foregoing descriptions should not be construed as a limitation on embodiments of this application.

The target model/rule 501 obtained through training by the training device 520 may be used in different systems or devices, for example, used in the execution device 510 shown in FIG. 3. The execution device 510 may be a terminal, for example, a mobile phone terminal, a tablet computer, a notebook computer, an augmented reality (augmented reality, AR)/virtual reality (virtual reality, VR) device, or a vehicle-mounted terminal, or may be a server.

Specifically, the training device 520 may transfer a trained model to the execution device 510.

In FIG. 3, the execution device 510 is provided with the input/output (input/output, I/O) interface 512, configured to exchange data with an external device. A user may input data (for example, series information in embodiments of this application) to the I/O interface 512 via the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the computing module 511 may be directly used to process the input data.

When the execution device 510 preprocesses the input data, or when the computing module 511 in the execution device 510 performs a related processing process such as computing, the execution device 510 may invoke data, code, and the like in the data storage system 550 for corresponding processing, or may store data, instructions, and the like obtained through corresponding processing in the data storage system 550.

Finally, the I/O interface 512 provides a processing result for the client device 540, to provide the processing result for the user.

In the case shown in FIG. 3, the user may manually give input data, and "manually giving the input data" may be operated on an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner, for example, display, sound, or an action. The client device 540 may also be used as a data collection terminal, collect the input data that is input to the I/O interface 512 and that is shown in the figure and the output result output from the I/O interface 512, use the input data and the output result as new sample data, and store the new sample data in the database 530. Certainly, alternatively, the client device 540 may not perform collection, and the I/O interface 512 directly uses the input data that is input to the I/O interface 512 and that is shown in the figure and the output result output from the I/O interface 512 as new sample data, and stores the new sample data in the database 530.

It should be noted that FIG. 3 is merely a diagram of the system architecture according to an embodiment of this application. A location relationship between a device, a component, a module, and the like shown in the figure constitutes no limitation. For example, in FIG. 3, the data storage system 550 is an external memory relative to the execution device 510. In another case, the data storage system 550 may alternatively be disposed in the execution device 510. It should be understood that the execution device 510 may be deployed in the client device 540.

Details from a perspective of model inference are as follows:

In embodiments of this application, the computing module 511 in the execution device 510 may obtain the code stored in the data storage system 550, to implement steps related to a model inference process in embodiments of this application.

In embodiments of this application, the computing module 511 in the execution device 510 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

Specifically, the computing module 511 in the execution device 510 may be a hardware system with an instruction execution function. The steps related to the model inference process provided in embodiments of this application may be software code stored in a memory. The computing module 511 in the execution device 510 may obtain the software code from the memory, and execute the obtained software code to implement the steps related to the model inference process provided in embodiments of this application.

It should be understood that the computing module 511 in the execution device 510 may be a combination of a hardware system without an instruction execution function and a hardware system with an instruction execution function. Some of the steps related to the model inference process provided in embodiments of this application may be implemented by the hardware system without an instruction execution function in the computing module 511 in the execution device 510. This is not limited herein.

Details from a perspective of model training are as follows:

In embodiments of this application, the training device 520 may obtain code stored in a memory (which is not shown in FIG. 3, and may be integrated into the training device 520 or separately deployed from the training device 520), to implement steps related to model training in embodiments of this application.

In embodiments of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processor, DSP), a microprocessor, or a microcontroller), or a combination of these hardware circuits. For example, the training device 520 may be a hardware system with an instruction execution function, for example, a CPU or a DSP, or may be a hardware system without an instruction execution function, for example, an ASIC or an FPGA, or may be a combination of the hardware system without an instruction execution function and the hardware system with an instruction execution function.

It should be understood that the training device 520 may be a combination of a hardware system without an instruction execution function and a hardware system with an instruction execution function. Some of the steps related to model training provided in embodiments of this application may be implemented by the hardware system without an instruction execution function in the training device 520. This is not limited herein.

2. Series information processing cloud service provided by a server:

In a possible implementation, the server may provide a series information processing service for a terminal side through an application programming interface (application programming interface, API).

A terminal device may send a related parameter (for example, series information) to the server through an API provided by a cloud. The server may obtain a processing result or the like based on the received parameter, and return the processing result to the terminal.

For descriptions of the terminal and the server, refer to the descriptions in the foregoing embodiments. Details are not described herein again.

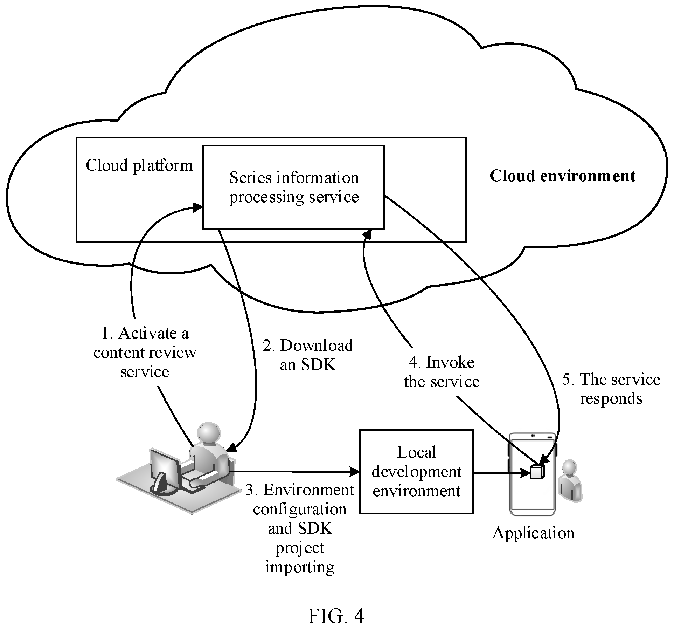

FIG. 4 shows a process of using a series information processing cloud service provided by a cloud platform.

1. Activate and purchase a content review service.

2. A user may download a software development kit (software development kit, SDK) corresponding to the content review service. Usually, the cloud platform provides SDKs of a plurality of development versions for the user to select based on a development environment requirement, for example, a Java-version SDK, a Python-version SDK, a PHP-version SDK, and an Android-version SDK.

3. The user downloads an SDK of a corresponding version locally as needed, imports an SDK project to a local development environment, and configures and debugs the SDK project in the local development environment. The local development environment may be further used for developing another function, to form an application that integrates a series information processing capability.

4. In a process of using a series information processing application, when series information processing needs to be performed, an API invocation of series information processing may be triggered. When an application triggers a series information processing function, an API request is initiated to a running instance of a series information processing service in a cloud environment. The API request carries series information, and the running instance in the cloud environment processes the series information to obtain a processing result.

5. The cloud environment returns the processing result to the application, to complete one invocation of a method provided in embodiments of this application.

Embodiments of this application relate to massive application of neural networks. Therefore, for ease of understanding, the following first describes terms and concepts related to the neural network in embodiments of this application.

(1) Neural network

The neural network may include a neuron. The neuron may be an operation unit that uses $x_s$ (namely, input data) and an intercept of 1 as an input. An output of the operation unit may be as follows:

$$h_{W,b}\left(x\right) = f\left(W^T x\right) = f(\sum\nolimits_{s=1}^{n} W_s x_s + b).$$

Herein, $s$=1, 2, ..., or $n$, $n$ is a natural number greater than 1, $W_s$ is a weight of $x_s$, and $b$ is bias of the neuron. $f$ is an activation function (activation function) of the neuron, used to introduce a non-linear feature into the neural network, to convert an input signal in the neuron into an output signal. The output signal of the activation function may be used as an input of a next convolutional layer, and the activation function may be a sigmoid function. The neural network is a network constituted by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) A convolutional neural network (convolutional neuron network, CNN) is a deep neural network with a convolutional structure. The convolutional neural network includes a feature extractor including a convolutional layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to a part of adjacent-layer neurons. A convolutional layer usually includes several feature planes, and each feature plane may include some neurons arranged in a rectangle. Neurons of a same feature plane share a weight, and the shared weight herein is a convolution kernel. Weight sharing may be understood as that a feature extraction manner is irrelevant to a location. The convolution kernel may be formalized as a matrix of a random size. In a training process of the convolutional neural network, an appropriate weight may be obtained for the convolution kernel through learning. In addition, direct benefit brought by weight sharing is that connections between layers in the convolutional neural network are reduced and an overfitting risk is reduced.

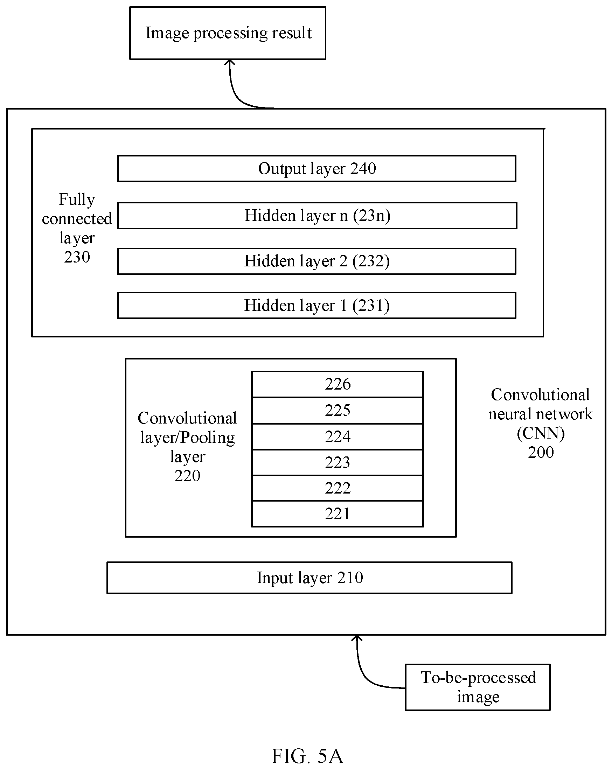

Because the CNN is a very common neural network, a structure of the CNN is described below in detail with reference to FIG. 5A. As described in the foregoing basic concepts, the convolutional neural network is a deep neural network with a convolutional structure, and is a deep learning (deep learning) architecture. In the deep learning architecture, multi-layer learning is performed at different abstract levels according to a machine learning algorithm. As a deep learning architecture, the CNN is a feed-forward (feed-forward) artificial neural network. Each neuron in the feed-forward artificial neural network may respond to series information input to the feed-forward artificial neural network.

As shown in FIG. 5A, a convolutional neural network (CNN) 200 may include an input layer 210, a convolutional layer/pooling layer 220 (the pooling layer is optional), and a fully connected layer (fully connected layer) 230.

Convolutional layer/Pooling layer 220:

Convolutional layer:

As shown in FIG. 5A, for example, the convolutional layer/pooling layer 220 may include layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layer 221 and the layer 222 are convolutional layers, the layer 223 is a pooling layer, the layer 224 and the layer 225 are convolutional layers, and the layer 226 is a pooling layer. In other words, an output of a convolutional layer may be used as an input of a subsequent pooling layer, or may be used as an input of another convolutional layer, to continue to perform a convolution operation.

The following describes internal working principles of a convolutional layer by using the convolutional layer 221 as an example.

The convolutional layer 221 may include a plurality of convolution operators. The convolution operator is also referred to as a kernel. In series information processing, the convolution operator functions as a filter that extracts specific information from an input series information matrix. The convolution operator may essentially be a weight matrix, and the weight matrix is usually predefined. In a process of performing a convolution operation on series information, the weight matrix usually processes one pixel after another pixel (or two pixels after another two pixels, depending on a value of a stride stride) in a horizontal direction on the input series information, to extract a specific feature from the series information. A size of the weight matrix should be related to a size of the series information. It should be noted that a depth dimension (depth dimension) of the weight matrix is the same as a depth dimension of the input series information. During a convolution operation, the weight matrix extends to an entire depth of the input series information. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of convolutional series information. The dimension herein may be understood as being determined based on the foregoing "a plurality of". Different weight matrices may be used to extract different features from the series information. For example, one weight matrix is used to extract edge information of the series information, another weight matrix is used to extract a specific color of the series information, and still another weight matrix is used to blur unnecessary noise in the series information. The plurality of weight matrices have the same size (rows×columns). Feature maps extracted based on the plurality of weight matrices with the same size also have a same size. Then the plurality of extracted feature maps with the same size are combined to form an output of the convolution operation.

Weight values in these weight matrices need to be obtained through a large amount of training during actual application. The weight matrices formed based on the weight values obtained through training may be used for extracting information from the input series information, to enable the convolutional neural network 200 to perform correct forecasting.

When the convolutional neural network 200 has a plurality of convolutional layers, an initial convolutional layer (for example, the layer 221) usually extracts more general features. The general feature may also be referred to as a low-level feature. As a depth of the convolutional neural network 200 increases, a deeper convolutional layer (for example, the layer 226) extracts more complex features, such as high-level semantic features. A feature with higher semantics is more applicable to a to-be-resolved problem.

Pooling layer:

Because a quantity of training parameters usually needs to be reduced, a pooling layer usually needs to be periodically introduced after a convolutional layer. To be specific, for the layers 221 to 226 in the layer 220 shown in FIG. 5A, one convolutional layer may be followed by one pooling layer, or a plurality of convolutional layers may be followed by one or more pooling layers. During series information processing, a sole purpose of the pooling layer is to reduce a space size of series information. The pooling layer may include an average pooling operator and/or a maximum pooling operator, to perform sampling on input series information to obtain series information with a small size. The average pooling operator may be used to calculate pixel values in the series information in a specific range, to generate an average value. The average value is used a result of average pooling. The maximum pooling operator may be used to select a pixel with a maximum value in a specific range as a maximum pooling result. In addition, similar to that the size of the weight matrix at the convolutional layer needs to be related to the size of the series information, an operator at the pooling layer also needs to be related to the size of the series information. A size of processed series information output from the pooling layer may be less than a size of series information input to the pooling layer. Each pixel in the series information output from the pooling layer represents an average value or a maximum value of a corresponding sub-area of the series information input to the pooling layer.

Fully connected layer 230:

After processing is performed by the convolutional layer/pooling layer 220, the convolutional neural network 200 still cannot output required output information. As described above, at the convolutional layer/pooling layer 220, only features are extracted, and parameters brought by the input series information are reduced. However, to generate final output information (required class information or other related information), the convolutional neural network 200 needs to use the fully connected layer 230 to generate an output of one required class or outputs of a group of required classes. Therefore, the fully connected layer 230 may include a plurality of hidden layers (the layers 231, 232, ..., and 23n shown in FIG. 5A). Parameters included in the plurality of hidden layers may be obtained through pre-training based on related training data of a specific task type. For example, the task type may include series information identification, series information classification, super-resolution series information reconstruction, and the like.

The plurality of hidden layers in the fully connected layer 230 are followed by the output layer 240, that is, the last layer of the entire convolutional neural network 200. The output layer 240 has a loss function similar to classification cross-entropy, and the loss function is specifically used to calculate a forecasting error. Once forward propagation of the entire convolutional neural network 200 (as shown in FIG. 5A, propagation from the layer 210 to the layer 240 is forward propagation) is completed, back propagation (as shown in FIG. 5A, propagation from the layer 240 to the layer 210 is back propagation) is started to update weight values and deviations of the layers mentioned above, to reduce a loss of the convolutional neural network 200 and an error between a result output by the convolutional neural network 200 through the output layer and an ideal result.

It should be noted that the convolutional neural network 200 shown in FIG. 5A is merely used as an example of a convolutional neural network. During specific application, the convolutional neural network may alternatively exist in a form of another network model, for example, include only a part of the network structure shown in FIG. 5A. For example, the convolutional neural network used in this embodiment of this application may include only the input layer 210, the convolutional layer/pooling layer 220, and the output layer 240.

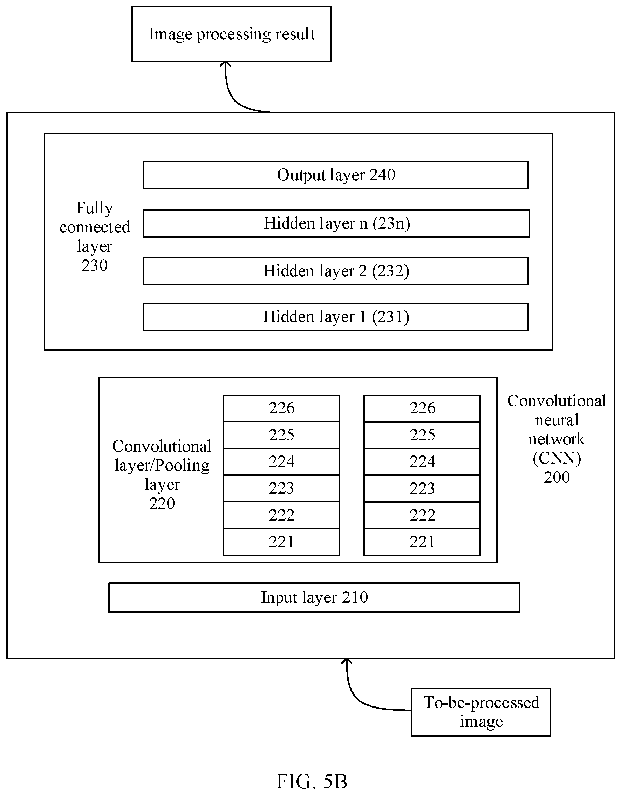

It should be noted that the convolutional neural network 100 shown in FIG. 5A is merely used as an example of a convolutional neural network. During specific application, the convolutional neural network may alternatively exist in a form of another network model. For example, as shown in FIG. 5B, there are a plurality of parallel convolutional layers/pooling layers, and extracted features are all input to the fully connected layer 230 for processing.

(3) Deep neural network

The deep neural network (Deep Neural Network, DNN), also referred to as a multi-layer neural network, may be understood as a neural network having a plurality of hidden layers. The "plurality of" herein does not have a special measurement standard. The DNN is divided based on locations of different layers, and a neural network in the DNN may be divided into three types: an input layer, a hidden layer, and an output layer. Usually, a first layer is the input layer, a last layer is the output layer, and an intermediate layer is the hidden layer. Layers are fully connected. To be specific, any neuron at an $i^{th}$ layer is necessarily connected to any neuron at an $(i+1)^{th}$ layer. Although the DNN seems complex, it is not complex in terms of work at each layer. Simply speaking, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, only such a simple operation is performed on the input vector x to obtain the output vector $\vec{y}$. Because the DNN has a large quantity of layers, there are a large quantity of the coefficients W and the offset vectors $\vec{b}$. Definitions of the parameters in the DNN are as follows: The coefficient W is used as an example. It is assumed that in a DNN with three layers, a linear coefficient from a $4^{th}$ neuron at a second layer to a $2^{nd}$ neuron at a third layer is defined as $w_{24}^{3}$. The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that the input layer does not have the parameter W. In the deep neural network, more hidden layers make the network more capable of describing a complex case in the real world. Theoretically, a model with more parameters has higher complexity and a larger "capacity". This indicates that the model can complete a more complex learning task. Training the deep neural network is a process of learning a weight matrix, and a final objective of the training is to obtain a weight matrix of all layers of the trained deep neural network (a weight matrix including vectors W at a plurality of layers).

(4) Loss function

In a process of training a deep neural network, because it is expected that an output of the deep neural network is as close as possible to a value that actually needs to be forecast, a current forecasting value of the network and an actually expected target value may be compared, and then a weight vector of each layer of the neural network is updated based on a difference between the current forecasting value and the target value (certainly, there is usually an initialization process before a first update, that is, parameters are preconfigured for all layers of the deep neural network). For example, if the forecasting value of the network is high, the weight vector is adjusted to decrease the forecasting value, and adjustment is continuously performed, until the deep neural network can forecast the actually expected target value or a value that is very close to the actually expected target value. Therefore, "how to obtain, through comparison, a difference between the forecasting value and the target value" needs to be predefined. This is a loss function (loss function) or an objective function (objective function). The loss function and the objective function are important equations that measure the difference between the forecasting value and the target value. The loss function is used as an example. A higher output value (loss) of the loss function indicates a larger difference. Therefore, training of the deep neural network is a process of minimizing the loss.

(5) Back propagation algorithm

A convolutional neural network may correct a value of a parameter in an initial super-resolution model in a training process according to an error back propagation (back propagation, BP) algorithm. In this way, an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is error-loss-centered back propagation motion intended to obtain a parameter, such as a weight matrix, of an optimal super-resolution model.

Series information may be referred to as a time series, a dynamic series, or the like, and is a numerical series formed by arranging indicator values of a phenomenon in a time sequence, and may reflect a development and change status of the phenomenon. A trend and regularity of development and changes of the phenomenon can be reflected by analyzing the time series. Internal causes of the changes of the phenomenon can be further explained by measuring factors that affect the time series, to provide reliable data support for forecasting and decision-making.

In the conventional technology, series information is processed by using a temporal convolutional network (TCN) method. Specifically, time series features may be captured by using convolution kernels that slide along a time dimension. However, a small effective receptive field limits performance of temporal convolutional networks. Recently, TimesNet proposes to transform one-dimensional time series into a two-dimensional tensor based on multi-period components and model the two-dimensional tensor based on a 2D kernel, thereby modeling periodicity and a long-range dependency of a time series. However, multi-period transformation is a parameter redundancy operation. This increases a parameter quantity and a computation amount of a network, and ignores a large amount of valuable information in frequency domain. As a result, a processing capability of the network is poor.

To resolve the foregoing problems, embodiments of this application provide a data processing method. The following describes in detail the data processing method in embodiments of this application with reference to accompanying drawings.

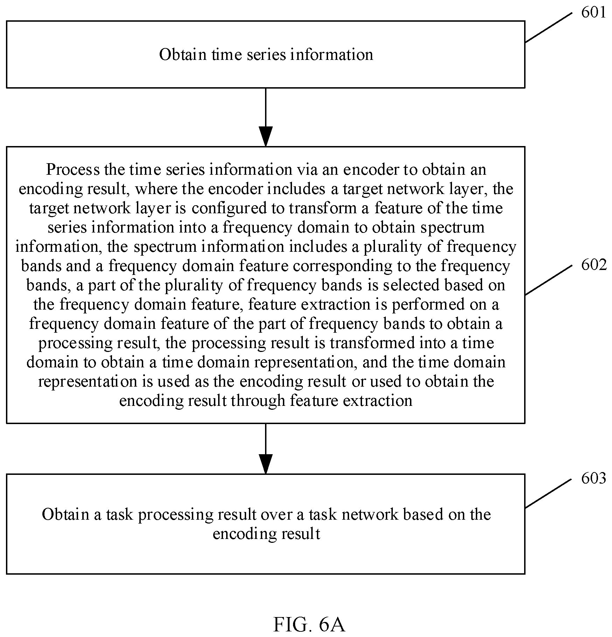

FIG. 6A is a schematic flowchart of a data processing method according to an embodiment of this application. As shown in FIG. 6A, the data processing method provided in this embodiment of this application may include steps 601 to 603. The following separately describes these steps in detail.

601: Obtain time series information.

The time series information may be referred to as a time series, a dynamic series, or the like, is a numerical series formed by arranging indicator values of a phenomenon in a time sequence, and may reflect a development and change status of the phenomenon.

602: Process the time series information via an encoder to obtain an encoding result, where the encoder includes a target network layer, the target network layer is configured to transform a feature of the time series information into a frequency domain to obtain spectrum information, the spectrum information includes a plurality of frequency bands and a frequency domain feature corresponding to the frequency bands, a part of the plurality of frequency bands is selected based on the frequency domain feature, feature extraction is performed on a frequency domain feature of the part of frequency bands to obtain a processing result, the processing result is transformed into a time domain to obtain a time domain representation, and the time domain representation is used as the encoding result or used to obtain the encoding result through feature extraction.

The encoder may include a plurality of network layers, and structures of different network layers may be the same or different. The network layer may execute a feature extraction process of the time series information. For example, the network layer may receive a feature representation obtained by an adjacent previous network layer, and continue to execute the feature extraction process.

In this embodiment of this application, the plurality of network layers may include the target network layer, and the target network layer may transform the feature of the time series information into the frequency domain to obtain the spectrum information.

In a possible implementation, the feature of the time series information may be transformed in a time domain direction or a data dimension direction into the frequency domain.

For example, the foregoing operation of transforming the time domain feature into the frequency domain may be performed in a time direction. In addition, it may be further introduced that the frequency domain feature in a dimension direction is obtained in the data dimension direction, or a frequency domain feature in both the time direction and the dimension direction is modeled. In the foregoing manner, a plurality of types of frequency domain features may be learned.

In a possible implementation, the feature of the time series information may be transformed into the frequency domain in, but not limited to, manners such as through Fourier transform, wavelet transform, or inverse wavelet transform.

For example, the foregoing operation of transforming the time domain feature into the frequency domain may be performed in the time direction through the Fourier transform. In addition, Fourier transform in the dimension direction may be further introduced to obtain the frequency domain feature in the dimension direction, or the frequency domain feature in both the time direction and the dimension direction is modeled through two-dimensional Fourier transform. In the foregoing manner, a plurality of types of frequency domain features may be learned.

In a possible implementation, the spectrum information includes the plurality of frequency bands and the frequency domain feature corresponding to the frequency bands. The target network layer may select the part of the plurality of frequency bands based on the frequency domain feature, and perform feature extraction on the frequency domain feature of the part of frequency bands to obtain the processing result (For example, in a possible implementation, the feature extraction is an element-wise multiplication operation performed on the frequency domain feature of the part of frequency bands based on a kernel kernel. Differences between the element-wise multiplication operation and convolution are as follows: (1) A result obtained by performing the element-wise multiplication on the kernel and the feature is not averaged, and an original scale is retained. (2) There is no sliding window operation herein. Therefore, feature extraction is performed by performing the element-wise multiplication on the sparse kernel and the feature. Because the feature of the part of the frequency bands is extracted, the kernel may be referred to as the sparse kernel).

Feature extraction is performed on only the frequency domain feature of the part of frequency bands, in other words, sparse modeling is performed, which improves network performance while reducing a computation amount. Specifically, because a large sparse kernel can cover all important frequencies, long-term and short-term dependencies and different period information of a feature can be captured, and computational complexity is low. In this process, even if a sparse operation is performed on only a significant frequency part, a model can achieve similar or even higher performance based on fewer parameters.

In a possible implementation, the frequency domain feature includes a feature of a plurality of dimensions, and that feature extraction is performed on the frequency domain feature of the part of frequency bands includes: performing feature extraction on a feature, in the frequency domain feature of the part of frequency bands, of a part of the plurality of dimensions.

In other words, a feature extraction manner of a frequency domain feature extraction part further includes dimension sparsification. For example, after a frequency domain feature $X_F \in \left[\frac{L}{2} + 1\right] \times C$ is obtained, where $L$ is a time domain length, $\left[\frac{L}{2} + 1\right]$ is a frequency domain length, and C is a dimension quantity, a kernel kernel scale may be set to Kernel $\in \left[\frac{L}{2} + 1\right] \times K$, where K < C. In this case, the kernel performs sparsification on a feature extraction operation of performing the element-wise multiplication on $X_F$, direction to perform the element-wise multiplication on $X_F$. K dimensions are selected in a fixed selection manner or a random selection manner, or may be adaptively selected by a network through learning.

In a possible implementation, an amplitude corresponding to each frequency band may be determined based on the frequency domain feature, and N frequency bands with a maximum amplitude or N frequency bands with a minimum amplitude are selected from the plurality of frequency bands. It should be understood that selecting a plurality of frequency bands with the maximum amplitude or the minimum amplitude is merely an example, and a part of frequency bands may be selected according to another rule. This is not limited in this application.

The amplitude corresponding to each frequency band may be obtained by, but not limited to, averaging feature values of different dimensions corresponding to the frequency band.

In a possible implementation, a frequency domain feature of a frequency band other than the selected part of frequency bands may not be processed.

In a possible implementation, the target network layer may transform the processing result into the time domain.

In a possible implementation, the target network layer may transform, into the time domain, the processing result and a frequency domain feature corresponding to a frequency band in the plurality of frequency bands other than the part of frequency bands.

In this embodiment of this application, to model period and global information, the feature is transformed into the frequency domain according to a fast discrete Fourier transform algorithm. In frequency domain, a time series feature does not have translation invariance, so that global modeling can be performed on the frequency feature.

For example, an obtained time domain feature $X_T$ is given, and the obtained time domain feature is transformed into the frequency domain through fast Fourier transform (FFT), to obtain a frequency domain feature $X_F$.

$$X_F = FFT(X_T)$$

Then, importance of different frequency bands are determined based on assigned values of the frequency bands in a spectrum.

$$A = Avg(Amp(X_F))$$

$Amp(\cdot)$ represents amplitudes of different dimensions of each frequency band, and A represents an amplitude of each frequency band (obtained by averaging values of different dimensions of the frequency band). A most important frequency band may be selected based on the importance: randomly selected, or selected according to another rule (for example, lowest K dimensions).

$$\{f_1, \ldots, f_k\} = argTopk_{f_* \epsilon \left\{1, \ldots, \left\lfloor \frac{L}{2}+1 \right\rfloor \right\}}$$

$f_*$ represents a specific frequency value of a selected frequency band. The feature extraction operation is performed only on the selected most important frequency band.

$$\widetilde{X_F}[f_1, \ldots, f_k] = X_F[f_1, \ldots, f_k] \times Kernel$$

The feature may be transformed back to the time domain through inverse Fourier transform:

$$\widetilde{X_T} = IFFT(\widetilde{X_F})$$

It should be noted that the frequency domain feature $\widetilde{X_F}$ includes all frequency bands.

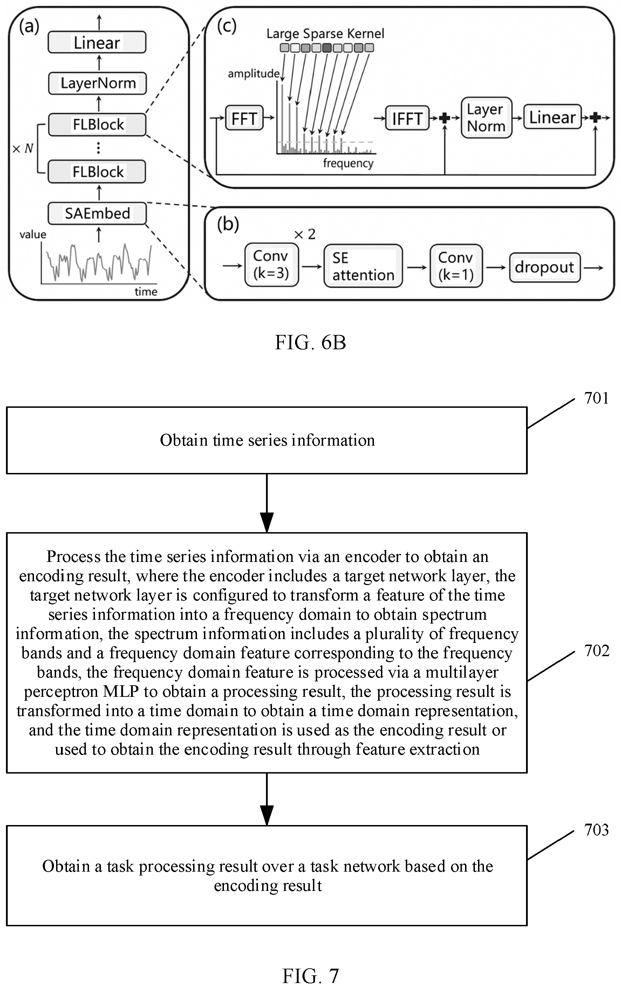

In addition, the encoder in this embodiment of this application may further include an embedding layer (which may be referred to as a semantic perception data embedding module (SAEmbed) in this embodiment of this application), configured to: process high-noise raw data, that is, aggregate local information based on more convolutional layers and an SE attention layer, and increase a feature signal-to-noise ratio, as shown in FIG. 6B. This module can effectively improve performance of the model in various tasks.

603: Obtain a task processing result over a task network based on the encoding result.

In a possible implementation, the task processing result is a long-term or short-term forecasting result of the time series information, an editing result of the time series information, an anomaly detection result of the time series information, or a classification result of the time series information.

The foregoing frequency domain processing may be further completed via a multilayer perceptron (multilayer perceptron, MLP) in addition to a large sparse core. FIG. 7 is a schematic flowchart of a data processing method according to an embodiment of this application. As shown in FIG. 7, the data processing method provided in this embodiment of this application may include steps 701 to 703. The following separately describes these steps in detail.

701: Obtain time series information.

For descriptions of step 701, refer to the descriptions of step 601 in the foregoing embodiment. Details are not described herein again.

702: Process the time series information via an encoder to obtain an encoding result, where the encoder includes a target network layer, the target network layer is configured to transform a feature of the time series information into a frequency domain to obtain spectrum information, the spectrum information includes a plurality of frequency bands and a frequency domain feature corresponding to the frequency bands, the frequency domain feature is processed via a multilayer perceptron MLP to obtain a processing result, the processing result is transformed into a time domain to obtain a time domain representation, and the time domain representation is used as the encoding result or used to obtain the encoding result through feature extraction.

The foregoing frequency domain processing may be further completed via the MLP in addition to the large sparse kernel. The frequency domain feature may be processed via the MLP in two directions: a frequency band direction and a dimension direction that are of the frequency domain.

In a possible implementation, the frequency domain feature may be processed in the frequency band direction and/or a data dimension direction via the multilayer perceptron MLP.

In a possible implementation, a feature, in the frequency domain feature of the part of frequency bands, of a part of the plurality of dimensions may be processed via the multilayer perceptron MLP.

703: Obtain a task processing result over a task network based on the encoding result.

In a possible implementation, the task processing result is a long-term or short-term forecasting result of the time series information, an editing result of the time series information, an anomaly detection result of the time series information, or a classification result of the time series information.

The following describes beneficial effect of embodiments of this application with reference to experiments.

In Table 1, long-series forecasting task performance of the method in embodiments of this application on large public benchmark datasets is compared, and results show that the algorithm in embodiments of this application has a larger advantage over another solution in terms of a long-series task.

During specific implementation, $x \in R^{(L+n) \times C}$ is obtained by performing zero padding on an input series $x \in R^{L \times C}$, where $n$ is a length of a series that needs to be forecast, and processing is performed based on the structure in FIG. 6B. A final linear layer maps a dimension C to k, where k is a quantity of forecasting variables.

Table 1

| Models | FL (Ours) | | TimesNet (2023) | | ETSformer (2022) | | LightTS (2022) | | DLinear (2023) | | FEDformer (2022) | | Stationary (2022) | | Autoformer (2021) | | Pyraformer (2021) | | Informer (2021) | | Reformer (2020) | |
|---|---|---|---|---|---|---|---|---|---|---|---|---|---|---|---|---|---|---|---|---|---|---|
| Metric | MSE | MAE | MSE | MAE | MSE | MAE | MSE | MAE | MSE | MAE | MSE | MAE | MSE | MAE | MSE | MAE | MSE | MAE | MSE | MAE | MSE | MAE |
| ETTm1 | **0.388** | **0.359** | 0.400 | 0.406 | 0.429 | 0.425 | 0.435 | 0.437 | 0.403 | 0.407 | 0.448 | 0.452 | 0.481 | 0.456 | 0.588 | 0.517 | 0.691 | 0.607 | 0.961 | 0.734 | 0.799 | 0.671 |
| ETTm2 | **0.287** | **0.326** | 0.291 | 0.333 | 0.293 | 0.342 | 0.409 | 0.436 | 0.350 | 0.401 | 0.305 | 0.349 | 0.306 | 0.347 | 0.327 | 0.371 | 1.498 | 0.869 | 1.410 | 0.810 | 1.479 | 0.915 |
| ETTh1 | **0.440** | **0.439** | 0.458 | 0.450 | 0.542 | 0.510 | 0.491 | 0.479 | 0.456 | 0.452 | **0.440** | 0.460 | 0.570 | 0.537 | 0.496 | 0.487 | 0.827 | 0.703 | 1.040 | 0.795 | 1.029 | 0.805 |
| ETTh2 | **0.397** | **0.415** | 0.414 | 0.427 | 0.439 | 0.452 | 0.602 | 0.543 | 0.559 | 0.515 | 0.437 | 0.449 | 0.526 | 0.516 | 0.450 | 0.459 | 0.826 | 0.703 | 4.431 | 1.729 | 6.736 | 2.191 |
| Electricity | **0.181** | **0.282** | 0.192 | 0.295 | 0.208 | 0.323 | 0.229 | 0.329 | 0.212 | 0.300 | 0.214 | 0.327 | 0.193 | 0.296 | 0.227 | 0.338 | 0.379 | 0.445 | 0.311 | 0.397 | 0.338 | 0.422 |
| Traffic | 0.618 | **0.324** | 0.620 | 0.336 | 0.621 | 0.396 | 0.622 | 0.392 | 0.625 | 0.383 | **0.610** | 0.376 | 0.624 | 0.340 | 0.628 | 0.379 | 0.878 | 0.469 | 0.764 | 0.416 | 0.741 | 0.422 |
| Weather | 0.263 | 0.291 | **0.259** | **0.287** | 0.271 | 0.334 | 0.261 | 0.312 | 0.265 | 0.317 | 0.309 | 0.360 | 0.288 | 0.314 | 0.338 | 0.382 | 0.946 | 0.717 | 0.634 | 0.548 | 0.803 | 0.656 |
| Exchange | 0.383 | 0.421 | 0.416 | 0.443 | 0.410 | 0.427 | 0.385 | 0.447 | **0.354** | **0.414** | 0.519 | 0.500 | 0.461 | 0.454 | 0.613 | 0.539 | 1.913 | 1.159 | 1.550 | 0.998 | 1.402 | 0.968 |
| ILI | **2.036** | **0.914** | 2.139 | 0.931 | 2.497 | 1.004 | 7.382 | 2.003 | 2.616 | 1.090 | 2.847 | 1.144 | 2.077 | 0.914 | 3.006 | 1.161 | 7.635 | 2.050 | 5.137 | 1.544 | 4.724 | 1.445 |
| Avg. | **0.555** | **0.419** | 0.577 | 0.434 | 0.634 | 0.468 | 1.201 | 0.598 | 0.649 | 0.475 | 0.681 | 0.491 | 0.614 | 0.473 | 0.741 | 0.515 | 1.733 | 0.780 | 1.800 | 0.886 | 2.006 | 0.944 |

Table 2 shows that the method in embodiments of this application also has high performance in terms of M4 short series forecasting benchmarks.

Specific implementation is the same as that of long series forecasting.

Table 2

| Models | FL (Ours) | TimesNet (2023) | N-HiTS (2022) | N-BEATS (2019) | ETSformer (2022) | LightTS (2022) | DLinear (2023) | FEDformer (2022) | Stationary (2022) | Autoformer (2021) | Pyraformer (2021) | Informer (2021) | Reformer (2020) |
|---|---|---|---|---|---|---|---|---|---|---|---|---|---|
| SMAPE | **11.736** | 11.829 | 11.927 | 11.851 | 14.718 | 13.525 | 13.639 | 12.840 | 12.780 | 12.909 | 16.987 | 14.086 | 18.200 |
| MASE | 1.587 | **1.585** | 1.613 | 1.599 | 2.408 | 2.111 | 2.095 | 1.701 | 1.756 | 1.771 | 3.265 | 2.718 | 4.223 |
| OWA | **0.848** | 0.851 | 0.861 | 0.855 | 1.172 | 1.051 | 1.051 | 0.918 | 0.930 | 0.939 | 1.480 | 1.230 | 1.775 |

Table 3 lists performance comparison of the algorithm in embodiments of this application on public benchmark datasets for imputation tasks. The method in embodiments of this application achieve best effect on all the datasets.

During specific implementation, a final linear layer maps a feature dimension to k, where k is a quantity of variables.

Table 3

| Models | FL (Ours) | | TimesNet (2023) | | ETSformer (2022) | | LightTS (2022) | | DLinear (2023) | | FEDformer (2022) | | Stationary (2022) | | Autoformer (2021) | | Pyraformer (2021) | | Informer (2021) | | Reformer (2020) | |
|---|---|---|---|---|---|---|---|---|---|---|---|---|---|---|---|---|---|---|---|---|---|---|---|
| Metric | MSE | MAE | MSE | MAE | MSE | MAE | MSE | MAE | MSE | MAE | MSE | MAE | MSE | MAE | MSE | MAE | MSE | MAE | MSE | MAE | MSE | MAE |
| ETTm1 | **0.019** | **0.090** | 0.027 | 0.107 | 0.120 | 0.253 | 0.104 | 0.218 | 0.093 | 0.206 | 0.062 | 0.177 | 0.036 | 0.126 | 0.051 | 0.150 | 0.717 | 0.570 | 0.071 | 0.188 | 0.055 | 0.166 |
| ETTm2 | **0.020** | **0.086** | 0.022 | 0.088 | 0.208 | 0.327 | 0.046 | 0.151 | 0.096 | 0.208 | 0.101 | 0.215 | 0.026 | 0.099 | 0.029 | 0.105 | 0.465 | 0.508 | 0.156 | 0.292 | 0.157 | 0.280 |
| ETTh1 | **0.051** | **0.151** | 0.078 | 0.187 | 0.202 | 0.329 | 0.284 | 0.373 | 0.201 | 0.306 | 0.117 | 0.246 | 0.094 | 0.201 | 0.103 | 0.214 | 0.842 | 0.682 | 0.161 | 0.279 | 0.122 | 0.245 |
| ETTh2 | **0.039** | **0.128** | 0.049 | 0.146 | 0.367 | 0.436 | 0.119 | 0.250 | 0.142 | 0.259 | 0.163 | 0.279 | 0.053 | 0.152 | 0.055 | 0.156 | 1.079 | 0.792 | 0.337 | 0.452 | 0.234 | 0.352 |
| Electricity | **0.088** | **0.205** | 0.092 | 0.210 | 0.214 | 0.339 | 0.131 | 0.262 | 0.132 | 0.260 | 0.130 | 0.259 | 0.100 | 0.218 | 0.101 | 0.225 | 0.297 | 0.382 | 0.222 | 0.328 | 0.200 | 0.313 |
| Weather | **0.028** | **0.052** | 0.030 | 0.054 | 0.076 | 0.171 | 0.055 | 0.117 | 0.052 | 0.110 | 0.099 | 0.203 | 0.032 | 0.059 | 0.031 | 0.057 | 0.152 | 0.235 | 0.045 | 0.104 | 0.038 | 0.087 |
| Avg. | **0.040** | **0.119** | 0.050 | 0.132 | 0.197 | 0.309 | 0.123 | 0.229 | 0.119 | 0.225 | 0.112 | 0.230 | 0.057 | 0.143 | 0.061 | 0.151 | 0.592 | 0.528 | 0.165 | 0.274 | 0.134 | 0.241 |

Table 4 lists performance comparison of the algorithm in embodiments of this application on public benchmark datasets for classification tasks. The method in embodiments of this application achieves leading performance.

During specific implementation, an output dimension of a last linear layer in FIG. 6B is directly set to a quantity of classes, that is, the model of the embodiment.

Table 4

| Datasets / Models | Classical | | RNN | | CNN | | Transformers | | | | | | | | | MLP | | |
|---|---|---|---|---|---|---|---|---|---|---|---|---|---|---|---|---|---|---|
| | XGBoost (2016) | Rocket (2020) 1 | LSTNet (2018) | LSSL (2022) | TCN (2019) | TimesNet (2023) | Trans. (2017) | Re. (2020) | In. (2021) | Pyra. (2021)( | Auto.: (2021) | Station. (2022) | .FED. (2022) | ETS. (2022), | Flow. 1 (2022) | DLinear, (2023) | LightTS. (2022) | FL (Ours) |
| EthanolConcentration | 43.7 | 45.2 | 39.9 | 31.1 | 28.9 | 35.7 | 32.7 | 31.9 | 31.6 | 30.8 | 31.6 | 32.7 | 31.2 | 28.1 | 33.8 | 32.6 | 29.7 | 34.6 |
| FaceDetection | 63.3 | 64.7 | 65.7 | 66.7 | 52.8 | 68.6 | 67.3 | 68.6 | 67.0 | 65.7 | 68.4 | 68.0 | 66.0 | 66.3 | 67.6 | 68.0 | 67.5 | 69.1 |
| Handwriting | 15.8 | 58.8 | 25.8 | 24.6 | 53.3 | 32.1 | 32.0 | 27.4 | 32.8 | 29.4 | 36.7 | 31.6 | 28.0 | 32.5 | 33.8 | 27.0 | 26.1 | 31.7 |
| Heartbeat | 73.2 | 75.6 | 77.1 | 72.7 | 75.6 | 78.0 | 76.1 | 77.1 | 80.5 | 75.6 | 74.6 | 73.7 | 73.7 | 71.2 | 77.6 | 75.1 | 75.1 | 75.6 |
| Japanese Vowels | 86.5 | 96.2 | 98.1 | 98.4 | 98.9 | 98.4 | 98.7 | 97.8 | 98.9 | 98.4 | 96.2 | 99.2 | 98.4 | 95.9 | 98.9 | 96.2 | 96.2 | 97.6 |
| PEMS-SF | 98.3 | 75.1 | 86.7 | 86.1 | 68.8 | 89.6 | 82.1 | 82.7 | 81.5 | 83.2 | 82.7 | 87.3 | 80.9 | 86.0 | 83.8 | 75.1 | 88.4 | 87.3 |
| SelfRegulationSCP1 | 84.6 | 90.8 | 84.0 | 90.8 | 84.6 | 91.8 | 92.2 | 90.4 | 90.1 | 88.1 | 84.0 | 89.4 | 88.7 | 89.6 | 92.5 | 87.3 | 89.8 | 93.2 |
| SelfRegulationSCP2 | 48.9 | 53.3 | 52.8 | 52.2 | 55.6 | 57.2 | 53.9 | 56.7 | 53.3 | 53.3 | 50.6 | 57.2 | 54.4 | 55.0 | 56.1 | 50.5 | 51.1 | 57.8 |
| SpokenArabicDigits | 69.6 | 71.2 | 100.0 | 100.0 | 95.6 | 99.0 | 98.4 | 97.0 | 100.0 | 99.6 | 100.0 | 100.0 | 100.0 | 100.0 | 98.8 | 81.4 | 100.0 | 99.6 |
| UWaveGestureLibrary | 75.9 | 94.4 | 87.8 | 85.9 | 88.4 | 85.3 | 85.6 | 85.6 | 85.6 | 83.4 | 85.9 | 87.5 | 85.3 | 85.0 | 86.6 | 82.1 | 80.3 | 86.6 |
| Average Accuracy | 66.0 | 72.5 | 71.8 | 70.9 | 70.3 | 73.6 | 71.9 | 71.5 | 72.1 | 70.8 | 71.1 | 72.7 | 70.7 | 71.0 | 73.0 | 67.5 | 70.4 | 73.3 |

Table 5 lists performance comparison of the algorithm in embodiments of this application on public benchmark datasets for anomaly detection tasks. The method in embodiments of this application also achieves leading performance.

During specific implementation, a final linear layer maps a feature dimension to k, where k is a quantity of variables.

Table 5

| Models | FL (Ours) | TimesNet (2023) | ETS. (2022) | FED. (2022) | LightTS (2022) | DLinear (2023) | Stationary (2022) | Auto. (2021) | Pyra. (2021) | Anomaly (2021) | In. (2021) | Re. (2020) | LogTrans (2019) | Trans. (2017) |
|---|---|---|---|---|---|---|---|---|---|---|---|---|---|---|
| SMD | **87.03** | 85.12 | 83.13 | 85.08 | 82.53 | 77.10 | 84.72 | 85.11 | 83.04 | 85.49 | 81.65 | 75.32 | 76.21 | 79.56 |
| MSL | 82.38 | 84.18 | **85.03** | 78.57 | 78.95 | 84.88 | 77.50 | 79.05 | 84.86 | 83.31 | 84.06 | 84.40 | 79.57 | 78.68 |
| SMAP | 69.35 | 70.85 | 69.50 | 70.76 | 69.21 | 69.26 | 71.09 | 71.12 | 71.09 | **71.18** | 69.92 | 70.40 | 69.97 | 69.70 |
| SWaT | **93.45** | 92.10 | 84.91 | 93.19 | 93.33 | 87.52 | 79.88 | 92.74 | 91.78 | 83.10 | 81.43 | 82.80 | 80.52 | 80.37 |
| PSM | 96.17 | 95.21 | 91.76 | 97.23 | 97.15 | 93.55 | **97.29** | 93.29 | 82.08 | 79.40 | 77.10 | 73.61 | 76.74 | 76.07 |
| Avg. | **85.68** | 85.49 | 82.87 | 84.97 | 84.23 | 82.46 | 82.08 | 84.26 | 82.57 | 80.50 | 78.83 | 77.31 | 76.60 | 76.88 |

27

Table 6 shows efficiency comparison between an FL model in embodiments of this application and other models in terms of parameters, inference time, and FLOPs. The FL model provided in embodiments of this application maintains very high efficiency while implementing optimal performance. In addition, it should be noted that model parameters in embodiments of this application increase slowly compared with a length of a series, and is still much fewer than parameters of the other models. In addition, when the length of the series is very long (for example, 3072), the model in embodiments of this application achieves optimal efficiency in terms of the parameters, the inference time, and the FLOPs.

Table 6

| Models | Series Length | Parameter (MB) | Infer. Time (ms / iter) | FLOPs (G) |
|---|---|---|---|---|
| FL (ours) | 384 | 0.293 | 4.10 | 0.077 |
|  | 768 | 0.332 | 4.28 | 0.163 |
|  | 1536 | 0.399 | 5.14 | 0.327 |
|  | 3072 | 0.486 | 5.47 | 0.655 |
| TimesNet | 384 | 4.690 | 12.42 | 5.401 |
|  | 768 | 4.690 | 26.94 | 10.801 |
|  | 1536 | 4.690 | 58.11 | 21.603 |
|  | 3072 | 4.690 | 106.53 | 43.205 |
| Non-stationary Transformer | 384 | 1.568 | 6.72 | 0.487 |
|  | 768 | 1.673 | 9.05 | 1.016 |
|  | 1536 | 1.874 | 9.97 | 2.032 |
|  | 3072 | 2.277 | 10.33 | 4.063 |
| Autoformer | 384 | 0.202 | 8.22 | 0.077 |
|  | 768 | 0.202 | 9.21 | 0.155 |
|  | 1536 | 0.202 | 10.21 | 0.309 |
|  | 3072 | 0.202 | 11.43 | 0.618 |
| FEDformer | 384 | 1.809 | 70.56 | 0.120 |
|  | 768 | 1.809 | 71.33 | 0.240 |
|  | 1536 | 1.809 | 72.10 | 0.481 |
|  | 3072 | 1.809 | 72.98 | 0.961 |
| LightTS | 384 | 0.177 | 1.40 | 0.002 |
|  | 768 | 0.625 | 1.42 | 0.005 |
|  | 1536 | 2.418 | 1.47 | 0.018 |
|  | 3072 | 9.551 | 1.58 | 0.070 |
| DLinear | 384 | 0.296 | 0.47 | 0.002 |
|  | 768 | 1.181 | 0.48 | 0.008 |
|  | 1536 | 4.729 | 0.49 | 0.033 |
|  | 3072 | 18.883 | 0.50 | 0.132 |
| ETSformer | 384 | 1.288 | 15.54 | 0.492 |
|  | 768 | 1.288 | 17.45 | 0.984 |
|  | 1536 | 1.288 | 22.92 | 1.968 |
|  | 3072 | 1.288 | 30.30 | 3.941 |
| Informer | 384 | 1.933 | 7.95 | 0.315 |
|  | 768 | 1.933 | 9.17 | 0.657 |
|  | 1536 | 1.933 | 63.82 | 1.314 |
|  | 3072 | 1.933 | 96.36 | 2.629 |
| Reformer | 384 | 1.157 | 5.64 | 0.424 |
|  | 768 | 1.157 | 5.66 | 0.887 |
|  | 1536 | 1.157 | 6.70 | 1.775 |
|  | 3072 | 1.157 | 6.83 | 3.550 |

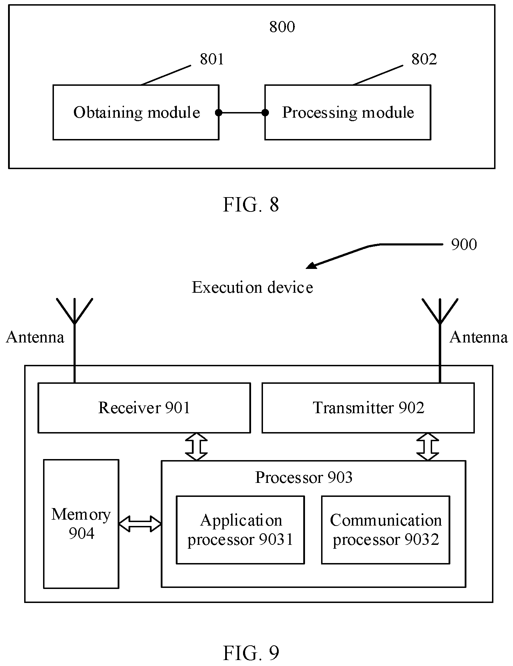

FIG. 8 is a diagram of a structure of a data processing apparatus according to an embodiment of this application. As shown in FIG. 8, the data processing apparatus 800 provided in this embodiment of this application includes:

an obtaining module 801, configured to obtain series information, where

for specific descriptions of the obtaining module 801, refer to the descriptions of step 601 in the foregoing embodiment, and details are not described herein again; and

a processing module 802, configured to: process the time series information via an encoder to obtain an encoding result, where

the encoder includes a target network layer, the target network layer is configured to transform a feature of the time series information into a frequency domain to obtain spectrum information, the spectrum information includes a plurality of frequency bands and a frequency domain feature corresponding to the frequency bands, a part of the plurality of frequency bands is selected based on the frequency domain feature, feature extraction is performed on a frequency domain feature of the part of frequency bands to obtain a processing result, the processing result is transformed into a time domain to obtain a time domain representation, and the time domain representation is used as the encoding result or used to obtain the encoding result through feature extraction; and

obtain a task processing result over a task network based on the encoding result.

For specific descriptions of the processing module 802, refer to the descriptions of steps 601 to 603 in the foregoing embodiment. Details are not described herein again.

In a possible implementation, the feature extraction is an element-wise multiplication operation performed on the frequency domain feature of the part of frequency bands based on a kernel kernel.

In a possible implementation, the frequency domain feature includes a feature of a plurality of dimensions, and the processing module is specifically configured to perform feature extraction on a feature, in the frequency domain feature of the part of frequency bands, of a part of the plurality of dimensions.

In a possible implementation, transforming the feature of the time series information into the frequency domain includes: transforming the feature of the time series information in a time domain direction and/or a data dimension direction into the frequency domain.

In a possible implementation, the processing module is specifically configured to:

transform, through Fourier transform or wavelet transform, the feature of the time series information into the frequency domain.

In a possible implementation, the processing module is specifically configured to:

determine, based on the frequency domain feature, an amplitude corresponding to each frequency band, and select N frequency bands with a maximum amplitude or N frequency bands with a minimum amplitude from the plurality of frequency bands.

In a possible implementation, the processing module is specifically configured to:

transform, into the time domain, the processing result and a frequency domain feature corresponding to a frequency band in the plurality of frequency bands other than the part of frequency bands.

In a possible implementation, the encoder further includes an embedding layer.

The embedding layer includes a plurality of convolution kernels and an SE attention layer.

In a possible implementation, the task processing result is a long-term or short-term forecasting result of the time series information, an editing result of the time series information, an anomaly detection result of the time series information, or a classification result of the time series information.

An embodiment of this application further provides a data processing apparatus. The apparatus includes:

an obtaining module, configured to obtain time series information; and

a processing module, configured to: process the time series information via an encoder to obtain an encoding result, where

the encoder includes a target network layer, the target network layer is configured to transform a feature of the time series information into a frequency domain to obtain spectrum information, the spectrum information includes a plurality of frequency bands and a frequency domain feature corresponding to the frequency bands, the frequency domain feature is processed via a multilayer perceptron MLP to obtain a processing result, the processing result is transformed into a time domain to obtain a time domain representation, and the time domain representation is used as the encoding result or used to obtain the encoding result through feature extraction; and

obtain a task processing result over a task network based on the encoding result.

In a possible implementation, that the frequency domain feature is processed via the multilayer perceptron MLP includes: processing the frequency domain feature in a frequency band direction and/or a data dimension direction via the multilayer perceptron MLP.

In a possible implementation, the frequency domain feature includes a feature of a plurality of dimensions, and the processing module is specifically configured to perform feature extraction on a feature, in the frequency domain feature of the part of frequency bands, of a part of the plurality of dimensions.

In a possible implementation, the task processing result is a long-term or short-term forecasting result of the time series information, an editing result of the time series information, an anomaly detection result of the time series information, or a classification result of the time series information.

The following describes an execution device provided in embodiments of this application. FIG. 9 is a diagram of a structure of an execution device according to an embodiment of this application. The execution device 900 may be specifically a virtual reality VR device, a mobile phone, a tablet computer, a notebook computer, an intelligent wearable device, a monitoring data processing device, a server, or the like. This is not limited herein. Specifically, the execution device 900 includes a receiver 901, a transmitter 902, a processor 903 (there may be one or more processors 903 in the execution device 900, and one processor is used as an example in FIG. 9), and a memory 904. The processor 903 may include an application processor 9031 and a communication processor 9032. In some embodiments of this application, the receiver 901, the transmitter 902, the processor 903, and the memory 904 may be connected through a bus or in another manner.

The memory 904 may include a read-only memory and a random access memory, and provide instructions and data for the processor 903. A part of the memory 904 may further include a non-volatile random access memory (non-volatile random access memory, NVRAM). The memory 904 stores a processor and operation instructions, an executable module or a data structure, a subset thereof, or an extended set thereof. The operation instructions may include various operation instructions for implementing various operations.

The processor 903 controls an operation of the execution device. During specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 903, or may be implemented by the processor 903. The processor 903 may be an integrated circuit chip and has a signal processing capability. In an implementation process, steps in the foregoing method may be implemented via a hardware integrated logic circuit in the processor 903, or according to instructions in a form of software. The processor 903 may be a general-purpose processor, a digital signal processor (digital signal processor, DSP), a microprocessor, or a microcontroller. The processor 903 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 903 may implement or perform the methods, steps, and logical block diagrams disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register. The storage medium is located in the memory 904, and the processor 903 reads information in the memory 904, and completes the steps related to the model inference process in the foregoing methods in combination with hardware of the processor 903.

The receiver 901 may be configured to: receive input digit or character information, and generate a signal input related to a related setting and function control of the execution device. The transmitter 902 may be configured to output digit or character information through a first interface. The transmitter 902 may be further configured to send instructions to a disk group through the first interface, to modify data in the disk group. The transmitter 902 may further include a display device, for example, a display.

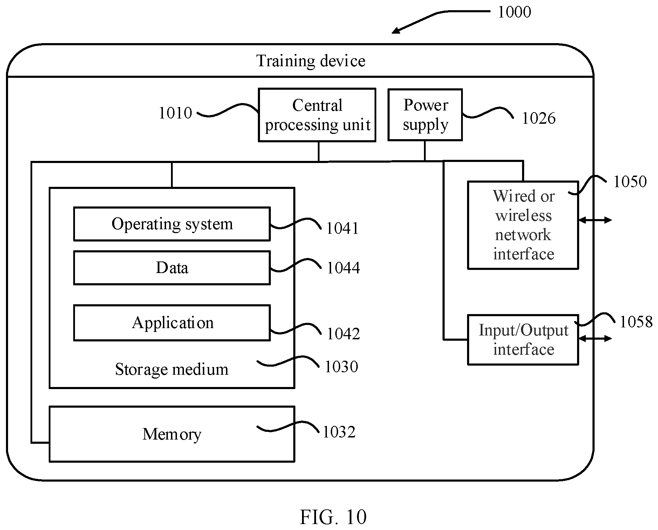

An embodiment of this application further provides a training device. FIG. 10 is a diagram of a structure of a training device according to an embodiment of this application. Specifically, the training device 1000 is implemented by one or more servers. The training device 1000 may vary greatly due to different configurations or performance, and may include one or more central processing units (central processing unit, CPU) 1010 (for example, one or more processors), a memory 1032, and one or more storage media 1030 (for example, one or more mass storage devices) for storing an application 1042 or data 1044. The memory 1032 and the storage medium 1030 may perform transient storage or persistent storage. A program stored in the storage medium 1030 may include one or more modules (not shown in the figure), and each module may include a series of instruction operations for the training device. Further, the central processing unit 1010 may be configured to: communicate with the storage medium 1030, and perform, on the training device 1000, a series of instruction operations in the storage medium 1030.

The training device 1000 may further include one or more power supplies 1026, one or more wired or wireless network interfaces 1050, one or more input/output interfaces 1058, or one or more operating systems 1041, for example, Windows ServerTM, Mac OS XTM, UnixTM, LinuxTM, or FreeBSDTM.

In this embodiment of this application, the central processing unit 1010 is configured to perform an action related to model training in the foregoing embodiments.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program for signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit. In this way, a chip in the execution device performs the data processing methods described in the foregoing embodiments, or a chip in the training device performs the data processing methods described in the foregoing embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

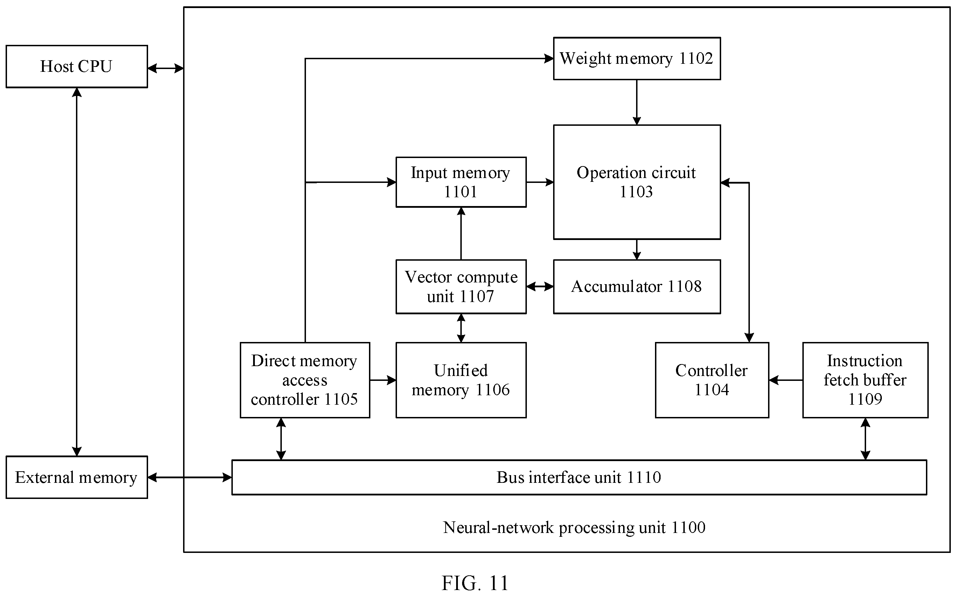

Specifically, FIG. 11 is a diagram of a structure of a chip according to an embodiment of this application. The chip may be represented by a neural-network processing unit NPU 1100. The NPU 1100 is mounted to a host CPU (host CPU) as a coprocessor, and the host CPU assigns a task to the NPU 1100. A core part of the NPU is an operation circuit 1103. A controller 1104 controls the operation circuit 1103 to extract matrix data in a memory and perform a multiplication operation.

In some implementations, the operation circuit 1103 includes a plurality of process engines (Process Engine, PE). In some implementations, the operation circuit 1103 is a two-dimensional systolic array. The operation circuit 1103 may alternatively be a one-dimensional systolic array or another electronic circuit that can perform arithmetical operations such as multiplication and addition. In some implementations, the operation circuit 1103 is a general-purpose matrix processor.

For example, it is assumed that there is an input matrix A, a weight matrix B, and an output matrix C. The operation circuit fetches, from a weight memory 1102, data corresponding to the matrix B, and caches the data on each PE in the operation circuit. The operation circuit fetches data of the matrix A from an input memory 1101, to perform a matrix operation on the matrix B, and stores an obtained partial result or an obtained final result of the matrix in an accumulator (accumulator) 1108.

A unified memory 1106 is configured to store input data and output data. Weight data is directly transferred to the weight memory 1102 via a direct memory access controller (Direct Memory Access Controller, DMAC) 1105. Input data is also transferred to the unified memory 1106 via the DMAC.

A BIU is a bus interface unit, namely, a bus interface unit 1110, and is used for interaction between an AXI bus, and the DMAC and an instruction fetch buffer (Instruction Fetch Buffer, IFB) 1109.

The bus interface unit (Bus Interface Unit, BIU for short) 1110 is used for the instruction fetch buffer 1109 to obtain instructions from an external memory, and is further used for the direct memory access controller 1105 to obtain raw data of the input matrix A or the weight matrix B from the external memory.

The DMAC is mainly configured to transfer input data in the external memory DDR to the unified memory 1106, transfer weight data to the weight memory 1102, or transfer input data to the input memory 1101.

A vector compute unit 1107 includes a plurality of operation processing units, and if needed, performs further processing, for example, vector multiplication, vector addition, an exponential operation, a logarithmic operation, or magnitude comparison, on an output of the operation circuit 1103. The vector compute unit 1107 is mainly configured to perform network computing, such as batch normalization (batch normalization), pixel-level summation, and upsampling of a feature plane, on a non-convolutional/fully connected layer of a neural network.

In some implementations, the vector compute unit 1107 can store a processed output vector in the unified memory 1106. For example, the vector compute unit 1107 may apply a linear function or a non-linear function to the output of the operation circuit 1103, for example, perform linear interpolation on a feature plane extracted at a convolutional layer. For another example, the vector compute unit 1107 may apply a linear function or a non-linear function to a vector of an accumulated value, to generate an activation value. In some implementations, the vector compute unit 1107 generates a normalized value, a pixel-level summation value, or both. In some implementations, the processed output vector can be used as an activated input to the operation circuit 1103, for example, the processed output vector can be used at a subsequent layer of the neural network.

The instruction fetch buffer (instruction fetch buffer) 1109 connected to the controller 1104 is configured to store instructions used by the controller 1104.

The unified memory 1106, the input memory 1101, the weight memory 1102, and the instruction fetch buffer 1109 are all on-chip memories. The external memory is private for an NPU hardware architecture.

The processor mentioned anywhere above may be a general-purpose central processing unit, a microprocessor, an ASIC, or one or more integrated circuits configured to control program execution.

In addition, it should be noted that the described apparatus embodiments are merely examples. The units described as separate parts may or may not be physically separate, and parts displayed as units may or may not be physical units, and may be located in one location, or may be distributed on a plurality of network units. A part or all of the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Generally, any function performed by a computer program can be easily implemented by using corresponding hardware, and a specific hardware structure used to achieve a same function may be of various forms, for example, in a form of an analog circuit, a digital circuit, a dedicated circuit, or the like. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

Apart or all of the foregoing embodiments may be implemented by using software, hardware, firmware, or any combination thereof. When the software is used to implement embodiments, a part or all of embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A data processing method, wherein the method comprises:

   obtaining time series information;
   processing the time series information via an encoder to obtain an encoding result, wherein
   the encoder comprises a target network layer, the target network layer is configured to transform a feature of the time series information into a frequency domain to obtain spectrum information, the spectrum information comprises a plurality of frequency bands and a frequency domain feature corresponding to the frequency bands, a part of the plurality of frequency bands is selected based on the frequency domain feature, feature extraction is performed on a frequency domain feature of the part of frequency bands to obtain a processing result, the processing result is transformed into a time domain to obtain a time domain representation, and the time domain representation is used as the encoding result or used to obtain the encoding result through feature extraction; and
   obtaining a task processing result over a task network based on the encoding result.

2. The method according to claim 1, wherein the feature extraction is an element-wise multiplication operation performed on the frequency domain feature of the part of frequency bands based on a kernel kernel.

3. The method according to claim 1 or 2, wherein the frequency domain feature comprises a feature of a plurality of dimensions, and that feature extraction is performed on the frequency domain feature of the part of frequency bands comprises: performing feature extraction on a feature, in the frequency domain feature of the part of frequency bands, of a part of the plurality of dimensions.

4. The method according to any one of claims 1 to 3, wherein transforming the feature of the time series information into the frequency domain comprises: transforming the feature of the time series information in a time domain direction and/or a data dimension direction into the frequency domain.

5. The method according to any one of claims 1 to 4, wherein that the part of the plurality of frequency bands is selected based on the frequency domain feature comprises:
determining, based on the frequency domain feature, an amplitude corresponding to each frequency band, and selecting N frequency bands with a maximum amplitude or N frequency bands with a minimum amplitude from the plurality of frequency bands.

6. The method according to any one of claims 1 to 5, wherein that the processing result is transformed into the time domain comprises:
transforming, into the time domain, the processing result and a frequency domain feature corresponding to a frequency band in the plurality of frequency bands other than the part of frequency bands.

7. The method according to any one of claims 1 to 6, wherein the encoder further comprises an embedding layer; and the embedding layer comprises a plurality of convolution kernels and an SE attention layer.

8. The method according to any one of claims 1 to 7, wherein the task processing result is a long-term or short-term forecasting result of the time series information, an editing result of the time series information, an anomaly detection result of the time series information, or a classification result of the time series information.

9. A data processing method, wherein the method comprises:

obtaining time series information;
processing the time series information via an encoder to obtain an encoding result, wherein
the encoder comprises a target network layer, the target network layer is configured to transform a feature of the time series information into a frequency domain to obtain spectrum information, the spectrum information comprises a plurality of frequency bands and a frequency domain feature corresponding to the frequency bands, the frequency domain feature is processed via a multilayer perceptron MLP to obtain a processing result, the processing result is transformed into a time domain to obtain a time domain representation, and the time domain representation is used as the encoding result or used to obtain the encoding result through feature extraction; and
obtaining a task processing result over a task network based on the encoding result.

10. The method according to claim 9, wherein that the frequency domain feature is processed via the multilayer perceptron MLP comprises: processing the frequency domain feature in a frequency band direction and/or a data dimension direction via the multilayer perceptron MLP.

11. A data processing apparatus, wherein the apparatus comprises:

an obtaining module, configured to obtain time series information; and
a processing module, configured to: process the time series information via an encoder to obtain an encoding result, wherein
the encoder comprises a target network layer, the target network layer is configured to transform a feature of the time series information into a frequency domain to obtain spectrum information, the spectrum information comprises a plurality of frequency bands and a frequency domain feature corresponding to the frequency bands, a part of the plurality of frequency bands is selected based on the frequency domain feature, feature extraction is performed on a frequency domain feature of the part of frequency bands to obtain a processing result, the processing result is transformed into a time domain to obtain a time domain representation, and the time domain representation is used as the encoding result or used to obtain the encoding result through feature extraction; and

obtain a task processing result over a task network based on the encoding result.

12. A data processing apparatus, wherein the apparatus comprises:

an obtaining module, configured to obtain time series information; and

a processing module, configured to: process the time series information via an encoder to obtain an encoding result, wherein

the encoder comprises a target network layer, the target network layer is configured to transform a feature of the time series information into a frequency domain to obtain spectrum information, the spectrum information comprises a plurality of frequency bands and a frequency domain feature corresponding to the frequency bands, the frequency domain feature is processed via a multilayer perceptron MLP to obtain a processing result, the processing result is transformed into a time domain to obtain a time domain representation, and the time domain representation is used as the encoding result or used to obtain the encoding result through feature extraction; and

obtain a task processing result over a task network based on the encoding result.

13. A computer storage medium, wherein the computer storage medium stores one or more instructions, and when the instructions are executed by one or more computers, the one or more computers are enabled to perform operations of the method according to any one of claims 1 to 10.

14. A computer program product, comprising computer-readable instructions, wherein when the computer-readable instructions are run on a computer device, the computer device is enabled to perform the method according to any one of claims 1 to 10.

15. A system, comprising at least one processor and at least one memory, wherein the processor and the memory are connected and communicate with each other through a communication bus;

the at least one memory is configured to store code; and

the at least one processor is configured to execute the code to perform the method according to any one of claims 1 to 10.

Intelligent information chain

Intelligent product and industry application

| Translation/Text analysis/... | Speech/Visual/Image/... |

Data

Data processing:

| Data training/Machine learning/ Deep learning | Searching/ Inference/ Decision-making | ... |

Infrastructure | Sensor | Intelligent chip | Base platform | ... |

IT value chain

FIG. 1A

Parameter 101 → Series information processing application 102 → Processing result 103

FIG. 1B

Terminal 100 — Parameter → Server 200
Terminal 100 ← Processing result — Server 200

FIG. 1C

Terminal 100

FIG. 1D

FIG. 2

FIG. 3

Cloud platform

Series information
processing service

**Cloud environment**

1. Activate a
content review
service

2. Download
an SDK

4. Invoke
the service

5. The service
responds

Local
development
environment

3. Environment
configuration
and SDK
project
importing

Application

FIG. 4

Image processing result

Fully
connected
layer
230

Output layer 240

Hidden layer n (23n)

Hidden layer 2 (232)

Hidden layer 1 (231)

Convolutional
neural network
(CNN)
200

Convolutional
layer/Pooling
layer
220

226

225

224

223

222

221

Input layer 210

To-be-processed
image

FIG. 5A

Image processing result

Output layer 240

Hidden layer n (23n)

Hidden layer 2 (232)

Hidden layer 1 (231)

Fully connected layer 230

| 226 | 226 |
| 225 | 225 |
| 224 | 224 |
| 223 | 223 |
| 222 | 222 |
| 221 | 221 |

Convolutional layer/Pooling layer 220

Convolutional neural network (CNN) 200

Input layer 210

To-be-processed image

FIG. 5B

```
                                                                           601
┌──────────────────────────────────────────────────────────┐
│                                                            │
│              Obtain time series information                │
│                                                            │
└──────────────────────────────────────────────────────────┘
                              │
                              ▼
┌──────────────────────────────────────────────────────────┐
│    Process the time series information via an encoder to   │
│  obtain an encoding result, where the encoder includes a   │
│  target network layer, the target network layer is        │
│  configured to transform a feature of the time            │
│  series information into a frequency domain to obtain      │
│  spectrum information, the spectrum information includes    │
│  a plurality of frequency bands and a frequency domain     │
│  feature corresponding to the frequency bands, a part of   │
│  the plurality of frequency bands is selected based on     │  602
│  the frequency domain feature, feature extraction is       │
│  performed on a frequency domain feature of the part of    │
│  frequency bands to obtain a processing result, the        │
│  processing result is transformed into a time domain to    │
│  obtain a time domain representation, and the time domain  │
│  representation is used as the encoding result or used to  │
│  obtain the encoding result through feature extraction     │
└──────────────────────────────────────────────────────────┘
                              │
                              ▼
                                                                           603
┌──────────────────────────────────────────────────────────┐
│  Obtain a task processing result over a task network based │
│               on the encoding result                       │
└──────────────────────────────────────────────────────────┘
```

FIG. 6A

FIG. 6B

FIG. 7

800

801

802

Obtaining module — Processing module

FIG. 8

900

Execution device

Antenna

Antenna

Receiver 901

Transmitter 902

Processor 903

Memory
904

Application
processor 9031

Communication
processor 9032

FIG. 9

FIG. 10

FIG. 11

## INTERNATIONAL SEARCH REPORT

| International application No. |
|---|
| **PCT/CN2024/121011** |

| A. | CLASSIFICATION OF SUBJECT MATTER |
|---|---|

G06N 3/0455(2023.01)i

According to International Patent Classification (IPC) or to both national classification and IPC

| B. | FIELDS SEARCHED |
|---|---|

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; CNKI; USTXT; IEEE: 时序, 频域, 时域, 频段, 编码器, timing, frequency domain, time domain, frequency band, encoder

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117391138 A (HUAWEI TECHNOLOGIES CO., LTD.) 12 January 2024 (2024-01-12) description, paragraphs 5-58 | 1-15 |
| A | CN 113360848 A (BEIJING TECHNOLOGY AND BUSINESS UNIVERSITY) 07 September 2021 (2021-09-07) description, paragraphs [0006]-[0043] | 1-15 |
| A | CN 113113039 A (GUANGZHOU HUANLIAO NETWORK TECHNOLOGY CO., LTD.) 13 July 2021 (2021-07-13) description, paragraphs 5-29 | 1-15 |
| A | CN 116451051 A (BEIJING UNION UNIVERSITY) 18 July 2023 (2023-07-18) entire document | 1-15 |
| A | US 2023214643 A1 (SAMSUNG ELETRÔNICA DA AMAZÔNIA LTDA.) 06 July 2023 (2023-07-06) entire document | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 December 2024** | **03 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/121011**

| Patent document cited in search report | | | Publication date (day/month/year) | Patent family member(s) | | | Publication date (day/month/year) |
|---|---|---|---|---|---|---|---|
| CN | 117391138 | A | 12 January 2024 | None | | | |
| CN | 113360848 | A | 07 September 2021 | None | | | |
| CN | 113113039 | A | 13 July 2021 | CN | 113113039 | B | 18 March 2022 |
| CN | 116451051 | A | 18 July 2023 | None | | | |
| US | 2023214643 | A1 | 06 July 2023 | BR | 102021026836 | A2 | 11 July 2023 |

Form PCT/ISA/210 (patent family annex) (July 2022)

**EP 4 779 521 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311284077